# EUROPEAN PATENT SPECIFICATION

(11) **EP 4 142 344 B1**
(45) Date of publication and mention of the grant of the patent: **24.12.2025**
(21) Application number: 22177770.9
(22) Date of filing: 08.06.2022
(51) Int. Cl.: H04W 24/02, H04W 12/50, H04W 84/12, H04W 12/02, H04W 36/08

(54) **ADDRESS RANDOMIZATION FOR MOBILE ACCESS POINTS**
ADRESSRANDOMISIERUNG FÜR MOBILE ZUGANGSPUNKTE
RANDOMISATION D'ADRESSES POUR POINTS D'ACCÈS MOBILE

(30) Priority: 27.08.2021 US 202163237962 P; 21.04.2022 US 202217660136
(43) Date of publication of application: 01.03.2023
(60) Divisional application: 25194098.7
(73) Proprietor: Apple Inc., Cupertino, CA 95014 (US)
(72) Inventor: DOMINGUEZ, Charles F., Cupertino, CA, 95014 (US); YONG, Su Khiong, Cupertino, CA, 95014 (US); LIU, Yong, Cupertino, CA, 95014 (US); BORGES, Daniel R., Cupertino, CA, 95014 (US); BRIGGS, Elliot S., Cupertino, CA, 95014 (US); THAKUR, Sidharth R., Cupertino, CA, 95014 (US); KNECKT, Jarkko L., Cupertino, CA, 95014 (US)
(74) Representative: Lang, Johannes

(56) References cited:
- US-A1- 2019 335 454
- US-A1- 2020 267 541
- JARKKO KNECKT (APPLE): "AP MLD Beaconing and Discovery", vol. 802.11 EHT; 802.11be, no. 2, 29 July 2020 (2020-07-29), pages 1 - 28, XP068170308, Retrieved from the Internet <URL:https://mentor.ieee.org/802.11/dcn/20/11-20-0865-02-00be-ap-mld-beaconing-and-discovery.pptx> [retrieved on 20200729]

## Description

### CROSS-REFERENCE TO RELATED APPLICATIONS

The present application claims the benefit of U.S. Provisional Patent Application No. 63/237,962, filed on August 27, 2021.

### BACKGROUND

### Field

The described aspects generally relate to wireless communication networks, such as a wireless local area network (WLAN), with mobile access points according to the features of the independent claims.

### Related Art

A wireless communication network can be established in a vehicle and/or using a mobile device operating as an access point (AP). One or more stations (STAs) can associate with the mobile AP (e.g., the AP in the vehicle, the mobile device operating as the AP, etc.) During the time the STAs are associated with the mobile AP, the associated STAs and/or the AP can be tracked. Therefore, the privacy of the mobile AP, the associated STAs, and the network can be compromised.
US 2020/267541 A1 discloses systems, methods, and devices related to security for multi-link operation, wherein a device may determine a multi-link communication with a first multi-link device comprising two or more links associated with two or more STAs included in the first multi-link device, and the device may determine a first medium access control (MAC) address associated with a first link of the two or more links, and determine a second MAC address associated with a second link of the two or more links, and wherein the device may generate one or more pairwise security keys to be used in the multi-link communication on the two or more links, and the device may cause to send a frame to the first multi-link device using at least one combination of the one or more pairwise security keys.

### SUMMARY

Some aspects of this disclosure include apparatuses and methods for implementing address and parameter modifications for an AP and/or an STA according to the features of the independent claims. Preferred embodiments thereof are defined by the features of the dependent claims. For examples, some aspects of this disclosure are directed to modifying (e.g., randomizing) addresses (e.g., media access control (MAC) addresses) and one or more parameters of the AP and the STA(s) while the STA(s) is associated with the AP.
Any reference to "embodiment(s)", "example(s)" or "aspect(s) of the invention" in this description not falling under the scope of the claims should be interpreted as illustrative example(s) for understanding the invention.

This Summary is provided for purposes of illustrating some aspects of the disclosure to provide an understanding of the subject matter described herein. Accordingly, the above-described features are examples and should not be construed to narrow the scope of the subject matter in this disclosure, as defined by the appended claims.

Other features, aspects, and advantages of this disclosure will become apparent from the following Detailed Description, Figures, and Claims.

### BRIEF DESCRIPTION OF THE FIGURES

The accompanying drawings, which are incorporated herein and form part of the specification, illustrate the present disclosure and, together with the description, further serve to explain the principles of the disclosure and enable a person of skill in the relevant art(s) to make and use the disclosure.
FIG. 1 illustrates an example system implementing address and parameter modifications for an AP and/or an STA, according to some aspects of the disclosure.
FIG. 2 illustrates a block diagram of an example wireless system of an electronic device implementing address and parameter modifications for an AP and/or an STA, according to some aspects of the disclosure.
FIGS. 3A and 3B illustrate examples of communication between an AP and an STA, according to some aspects of the disclosure.
FIGS. 3C-3F illustrate an exemplary BTM request frame format, according to some aspects of the disclosure.
FIGS. 3G and 3H illustrate exemplary availability and termination of multiple APs, according to some aspects of the disclosure.
FIG. 4 illustrates exemplary communication between two APs and an STA, according to some aspects of the disclosure.
FIGS. 5A and 5B illustrate exemplary communication between an AP and an STA with channel switch, according to some aspects of the disclosure.
FIG. 5C illustrates an exemplary channel switch frame format, according to some aspects of the disclosure.
FIG. 6 illustrates an example method for a wireless system (e.g., an AP) supporting and implementing address and parameter modifications for an AP and/or an STA, according to some aspects of the disclosure.
FIG. 7 illustrates an example method for a wireless system (e.g., an STA) supporting and implementing address and parameter modifications for an AP and/or an STA, according to some aspects of the disclosure.
FIG. 8 illustrates an example computer system for implementing some aspects of the disclosure or portion(s) thereof.

The present disclosure is described with reference to the accompanying drawings. In the drawings, generally, like reference numbers indicate identical or functionally similar elements. Additionally, generally, the left-most digit(s) of a reference number identifies the drawing in which the reference number first appears.

### DETAILED DESCRIPTION

Some aspects of this disclosure include apparatuses and methods for implementing address and parameter modifications for an AP and/or an STA. For examples, some aspects of this disclosure are directed to modifying (e.g., randomizing) addresses (e.g., media access control (MAC) addresses) and one or more parameters of the AP and the STA(s) while the STA(s) is associated with the AP. In some examples, by modifying the addresses and other parameters of the AP and the STA(s), the privacy of the wireless network can be improved.

According to some aspects of the disclosure, the address and parameter modifications for an AP and/or an STA of this disclosure can be implemented with communication techniques compatible with Institute of Electrical and Electronics Engineers (IEEE) 802.11 standards (such as, but not limited to, IEEE 802.11aq, IEEE 802.11bi, IEEE 802.11w, etc. standards). However, the aspects of this disclosure can also be applied to operations in other communication networks operating in accordance with any protocol(s).

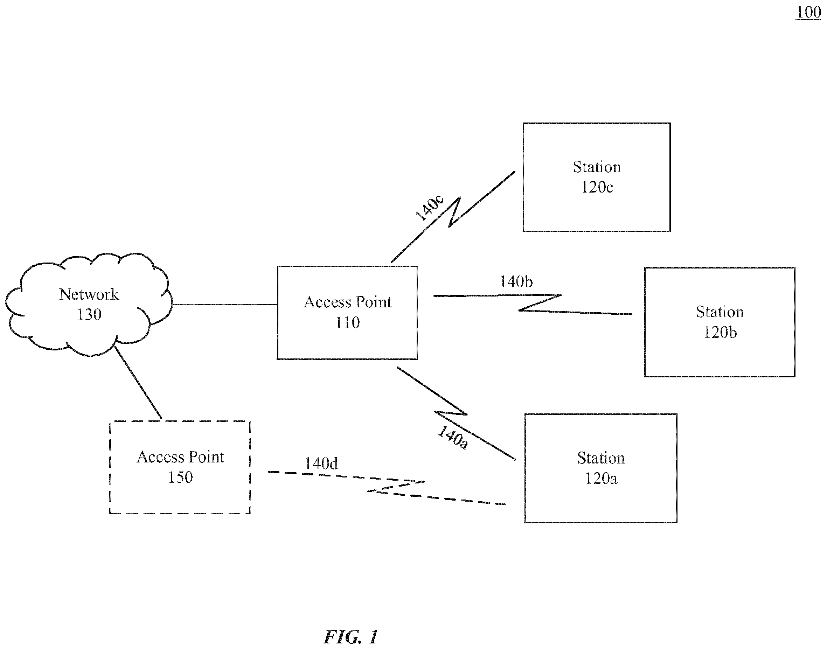

FIG. 1 illustrates an example system 100 implementing address and parameter modifications for an AP and/or an STA, according to some aspects of the disclosure. Example system 100 is provided for the purpose of illustration only and does not limit the disclosed aspects. System 100 may include, but is not limited to, access points (AP) 110 and 150, stations (STAs) 120, and network 130. STAs 120a-120c may include, but are not limited to, Wireless Local Area Network (WLAN) stations such as wireless communication devices, smart phones, laptops, desktops, tablets, personal assistants, monitors, televisions, wearable devices (e.g., smart watches), Internet-of-Things (IoT) devices, gaming devices, and the like. APs 110 and 150 may include but is not limited to WLAN electronic devices such as a wireless router, a wearable device (e.g., a smart watch), a wireless communication device (e.g., a smart phone), an IoT device, a gaming device, or a combination thereof. Network 130 may be the Internet and/or a WLAN. STA 120's communications are shown as wireless communications 140. The communication between APs 110 and 150 and STAs 120 can take place using wireless communications 140a-140d. The wireless communications 140a-140d can be based on a wide variety of wireless communication techniques. These techniques can include, but are not limited to, techniques based on IEEE 802.11 (such as, but not limited to IEEE 802.11aq, IEEE 802.11bi, IEEE 802.11w, etc. standards).

According to some aspects, system 100 can include a multi-link communication network. In this example, APs 110 and 150 can include an AP multi-link device (MLD). Also, one or more of STAs 120 can include non-AP MLDs.

According to some aspects, AP 110 and/or AP 150 can include a mobile AP. In some examples, the mobile AP can include an AP in a vehicle, on a train, on a plane, or the like. In some examples, the mobile AP can include an AP operated by a mobile electronic device (such as, but not limited to, a smart phone, a laptop, a tablet, a wearable device, and the like).

STA 120a (as one exemplary STA) can be associated with AP 110 and can communicate with AP 110 and/or network 130 through wireless communications 140a. In some examples, during the time that STA 120a is associated with AP 110, STA 120a can operate using the same address (e.g., MAC address). By using the same MAC address during its association period with AP 110, STA 120a (and/or AP 110) can be vulnerable to tracing and/or attack. For example, an attacker device can trace STA 120a (and/or AP 110) when STA 120a (and/or AP 110) maintains its address during the associated period.

In some examples, STA 120a may change its address. For example, STA 120a may redo authentication and association procedures with AP 110. However, if the authentication and association signaling is not protected, the attacker device can follow STA 120a's address update. Additionally, AP 110 maintains and uses the same address (and/or parameters) as long as AP 110 has an associated STA. Therefore, the attacker can also trace the AP 110's address (and/or parameters).

According to some aspects, and as discussed in more detail below, system 100 implements apparatus and methods to modify address(es) and/or parameters AP 110 and/or STA 120 to improve, for example, the privacy of system 100. In some aspects, AP 110 can be a physical AP configured to operate one or more AP instances. In this example, STA 120a, which is associated with AP 110, can be associated with a first AP instance. AP 110 (using, for example, the first AP instance) can steer the associated STA 120a to communicate with a second AP instance with a different address and/or different parameter(s). In this example, during the transition time (e.g., the time to transition STA 120a from the first AP instance to the second AP instance), AP 110 can operate two AP instances at the same time. After the transition, the STA 120a can communicate with AP 110 using the second AP instance that has different address and/or different parameters compared to the first AP instance of AP 110.

Additionally, or alternatively, AP 110 can maintain one AP instance at a time and AP 110 can switch channels and modify addresses and/or parameters of AP 110 and associated STA 120a. In some examples, AP 110 maintains one AP instance at a time and the channel switch can be done at the same time (or substantially at the same time) for AP 110 and STA 120a. In some examples, STA 120a can use the same association to operate with AP 110 in the new channel.

Additionally, or alternatively, STA 120a can change its address and/or parameter(s) in transitioning from AP 110 to AP 150, which are on the same network. STA 120a may signal its new address and/or new parameter(s) to the network to allow the network to identify STA 120a with its new address and/or parameter(s).

As discussed in this disclosure, modifying the address and/or parameter(s) can include determining (e.g., selecting) a new address and/or a new parameter(s).

According to some aspects, addresses and/or parameters of AP 110 and/or STA 120a can be modified (e.g., randomized) in each of mechanisms discussed above. In some examples, the parameters to be modified can include parameters that can be used in tracing AP 110 and/or STA 120a. In addition to, or alternative to, modifying the addresses and/or parameter of AP 110 and/or STA 120a, system 100 can use other mechanisms to improve its privacy.

For example, the associated STAs (e.g., STA 120a) can use protected management frames in their communication with AP 110. In a non-limiting example, the associated STAs only send encrypted management frames (e.g., based on IEEE 802.11w standard).

In another example, system 100 can use secure security mode. In a non-limiting example, system 100 can use Wi-Fi^{™} Protected Access version 3 Personal Mode (WPA3 Personal). In some examples, system 100 does not use unsecure security modes such as, but not limited to, open network, WEP (Wired Equivalent Privacy), WPA, WPA2, TKIP (Temporary Key Integrity Protocol) cipher suites.

In some examples, system 100 can implement privacy client privacy mechanisms. The privacy client privacy mechanisms can include Wi-Fi^{™} Client Privacy (e.g., WPA3 Release 3, such as IEEE 802.11aq standard). For example, the privacy client privacy mechanisms can include Randomized MAC Addresses, Dynamic Host Configuration Protocol (DHCP) Pool Exhaustion (e.g., reclaim IP addresses from deleted users, if they run out), DHCP Lease Timeout less than, for example, 2 hours, and the like.

In some examples, system 100 can use pre-association security. The pre-association security can include, for example, Preassociation Security Negotiation (PASN) protocol to be used to protect non-associated STAs frames transmitted to AP 110.

In some examples, system 100 can use protected block acknowledgments (Acks). For example, Block Ack Request frames are protected, so that no device can change the Sequence Number (SN) from which the receiver keeps reorder buffer.

In some examples, system 100 can use Beacon protection. For example, the Beacon frames can contain integrity check sum, so that receivers can verify the integrity of the received Beacon frames.

In some examples, system 100 does not use one or more of MAC Address Filtering or Access Control, MAC Address Identification, and MAC Address Memory. In some examples, as the addresses change, a MAC addresses can identify an STA only temporarily.

According to some examples, system 100 can use multiple randomized AP addresses. For example, when an AP (e.g., AP 110) is started, its addresses (e.g., MAC addresses) are randomized (or substantially randomized, e.g., pseudo random). In one example, a Locally Administered bit of the MAC address is set to a first value (e.g., "1") and a Unicast/Multicast bit of the MAC address is set to a second value (e.g., "0"). The other bits (e.g., other 46 bits) of the MAC address are set to random (or substantially random, e.g., pseudo random) values. In this example, AP 110 can hide its Service Set Identifier (SSID) and does not transmit its SSID in Beacons and/or other frames.

Additionally, or alternatively, AP 110 can randomize the initial values of Time Synchronization function (TSF), Sequence numbers of the Physical Protocol Data Units (PPDUs), Dialog token values to identify management frames that belong to the same transaction, i.e. request response signaling, and/or scrambler seeds in PHY preambles. In some examples, scanning privacy (e.g., based on IEEE 802.11aq standard) is implemented for AP 110 and STA 120. In some examples, AP 110 can scan at random times so that other STAs cannot detect AP 110 to be scanning.

According to some aspects, the element values that AP 110 sends do not contain identifiers that can be used to fingerprint AP 110. For example, the element value does not include serial numbers or other information that are STA specific. The order of the proprietary elements and elements are random (or substantially random) unless the order is defined in an standard, according to some examples. The random order is applied in all frames, including, but not limited to, authentication, Generic Advertisement Service (GAS), association, etc.

According to some aspects, the one or more parameters that can be modified in AP 110 and/or STA 120a can include, but are not limited to, parameters associated with management frames, parameters associated with security modes, parameters associated with block Ack, parameters associated with Beacons and/or other frames, parameters associated with MAC address, TSF, Sequence numbers of the PPDUs, Dialog token values to identify management frames, scrambler seeds in PHY preambles, and the like. However, the one or more parameters that can be modified in AP 110 and/or STA 120a can include other parameters. For example, the one or more parameters can include any parameter that can be used to trace AP 110 and/or STA 120a.

Each of wireless communication 140a-140d can include one or more links, according to some aspects. For example, wireless communication 140 can include one or more links. Each link can include a wireless channel, according to some aspects. Each wireless channel/link can be defined based on its respective frequency that is different from the others. However, the aspects of this disclosure are not limited to wireless channels and other MAC/PHY layer links can be used as links for communication between, for example, STA 120a and AP 110.

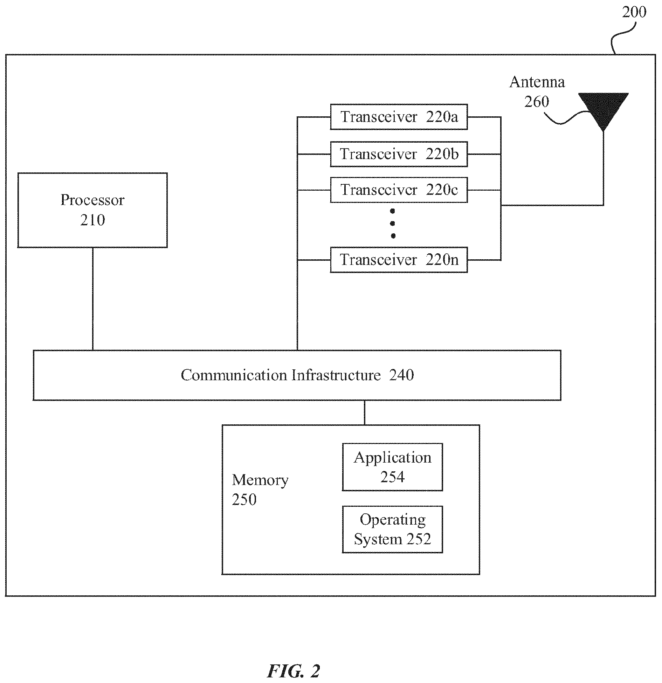

FIG. 2 illustrates a block diagram of an example wireless system 200 of an electronic device implementing address and parameter modifications for an AP and/or an STA, according to some aspects of the disclosure. System 200 may be any of the electronic devices (e.g., AP 110, AP 150, STA 120) of system 100. System 200 includes processor 210, one or more transceivers 220a-220n, communication infrastructure 240, memory 250, operating system 252, application 254, and antenna 260. Illustrated systems are provided as exemplary parts of wireless system 200, and system 200 can include other circuit(s) and subsystem(s). Also, although the systems of wireless system 200 are illustrated as separate components, the aspects of this disclosure can include any combination of these, less, or more components.

Memory 250 may include random access memory (RAM) and/or cache, and may include control logic (e.g., computer software) and/or data. Memory 250 may include other storage devices or memory such as, but not limited to, a hard disk drive and/or a removable storage device/unit. According to some examples, operating system 252 can be stored in memory 250. Operating system 252 can manage transfer of data from memory 250 and/or one or more applications 254 to processor 210, one or more transceivers 220a-220n. In some examples, operating system 252 maintains one or more network protocol stacks (e.g., Internet protocol stack, cellular protocol stack, and the like) that can include a number of logical layers. At corresponding layers of the protocol stack, operating system 252 includes control mechanism and data structures to perform the functions associated with that layer.

According to some examples, application 254 can be stored in memory 250. Application 254 can include applications (e.g., user applications) used by wireless system 200 and/or a user of wireless system 200. The applications in application 254 can include applications such as, but not limited to, Siri^{™}, FaceTime^{™}, radio streaming, video streaming, remote control, gaming application(s), and/or other user applications.

System 200 can also include communication infrastructure 240. Communication infrastructure 240 provides communication between, for example, processor 210, one or more transceivers 220a-220n, and memory 250. In some implementations, communication infrastructure 240 may be a bus. Processor 210 together with instructions stored in memory 250 performs operations enabling wireless system 200 of system 100 to implement address and parameter modifications for an AP and/or an STA as described herein. Additionally, or alternatively, one or more transceivers 220a-220n perform operations enabling wireless system 200 of system 100 to implement address and parameter modifications for an AP and/or an STA as described herein.

One or more transceivers 220a-220n transmit and receive communications signals that support the address and parameter modifications, according to some aspects, and may be coupled to antenna 260. (Herein, transceivers can also be referred to as radios). Antenna 260 may include one or more antennas that may be the same or different types. One or more transceivers 220a-220n allow system 200 to communicate with other devices that may be wired and/or wireless. In some examples, one or more transceivers 220a-220n can include processors, controllers, radios, sockets, plugs, buffers, and like circuits/devices used for connecting to and communication on networks. According to some examples, one or more transceivers 220a-220n include one or more circuits to connect to and communicate on wired and/or wireless networks.

According to some aspects of this disclosure, one or more transceivers 220a-220n can include a cellular subsystem, a WLAN subsystem, and/or a Bluetooth^{™} subsystem, each including its own radio transceiver and protocol(s) as will be understood by those skilled arts based on the discussion provided herein. In some implementations, one or more transceivers 220a-220n can include more or fewer systems for communicating with other devices.

In some examples, one or more transceivers 220a-220n can include one or more circuits (including a cellular transceiver) for connecting to and communicating on cellular networks. The cellular networks can include, but are not limited to, 3G/4G/5G networks such as Universal Mobile Telecommunications System (UMTS), Long-Term Evolution (LTE), and the like.

Additionally, or alternatively, one or more transceivers 220a-220n can include one or more circuits (including a Bluetooth^{™} transceiver) to enable connection(s) and communication based on, for example, Bluetooth^{™} protocol, the Bluetooth^{™} Low Energy protocol, or the Bluetooth^{™} Low Energy Long Range protocol. For example, transceiver 220n can include a Bluetooth^{™} transceiver.

Additionally, one or more transceivers 220a-220n can include one or more circuits (including a WLAN transceiver) to enable connection(s) and communication over WLAN networks such as, but not limited to, networks based on standards described in IEEE 802.11 (such as, but not limited to IEEE 802.11aq, IEEE 802.11bi, IEEE 802.11w, etc. standards). For example, transceiver 220a can enable connection(s) and communication over a WLAN (e.g., a multi-link WLAN) having a first link associated with 2.4 GHz wireless communication channel. For example, transceiver 220b can enable connection(s) and communication over the WLAN having a second link associated with 5 GHz wireless communication channel. For example, transceiver 220c can enable connection(s) and communication over the WLAN having a third link associated with 6 GHz wireless communication channel. However, the aspects of this disclosure are no limited to these wireless channels and other PHY layer links and/or other wireless channels can be used.

Additionally, or alternatively, wireless system 200 can include one WLAN transceiver configured to operate at two or more links. Processor 210 can be configured to control the one WLAN transceiver to switch between different links, according to some examples. For example, transceiver 220a can enable connection(s) and communication over a WLAN (e.g., a multi-link WLAN) having a first link associated with 2.4 GHz wireless communication channel. And transceiver 220b can enable connection(s) and communication over the WLAN having a second link associated with 5 GHz wireless communication channel and can enable connection(s) and communication over the WLAN having a third link associated with 6 GHz wireless communication channel. According to some aspects of the disclosure, the switching from the first link to the second link can include using a transceiver (e.g., transceiver 220b) associated with the second link instead of the transceiver (e.g., transceiver 220a) associated with the first link. Additionally, or alternatively, the switching from the first link to the second link can include controlling a single transceiver (e.g., transceiver 220) to operate at the frequency of the second link instead of operating at the frequency of the first link.

According to some aspects, system 200 can be implemented in AP 110 (e.g., a physical mobile AP). In some examples, system 200 of AP 110 can be configured to generate and/or maintain one or more AP instances. According to some aspects, the one or more AP instances can be generated using one or more transceivers 220a-220n.

In one example, two or more AP instances can be associated with one transceiver. For example, a first AP instance can be associated with transceiver 220b operating at a first link/channel and a second AP instance can be associated with transceiver 220b operating at a second link/channel. In some examples, the first link is the same as the second link. In some examples, the first link is different from the second link.

In another example, each AP instance can be associated with one transceiver. For example, a first AP instance can be associated with transceiver 220a operating at a first link/channel and a second AP instance can be associated with transceiver 220b operating at a second link/channel. In some examples, the first link is the same as the second link. In some examples, the first link is different from the second link.

However, the aspects of this disclosure are not limited to these examples and AP 110 (e.g., the physical mobile AP) can be use other transceivers and/or channel to create and maintain AP instances.

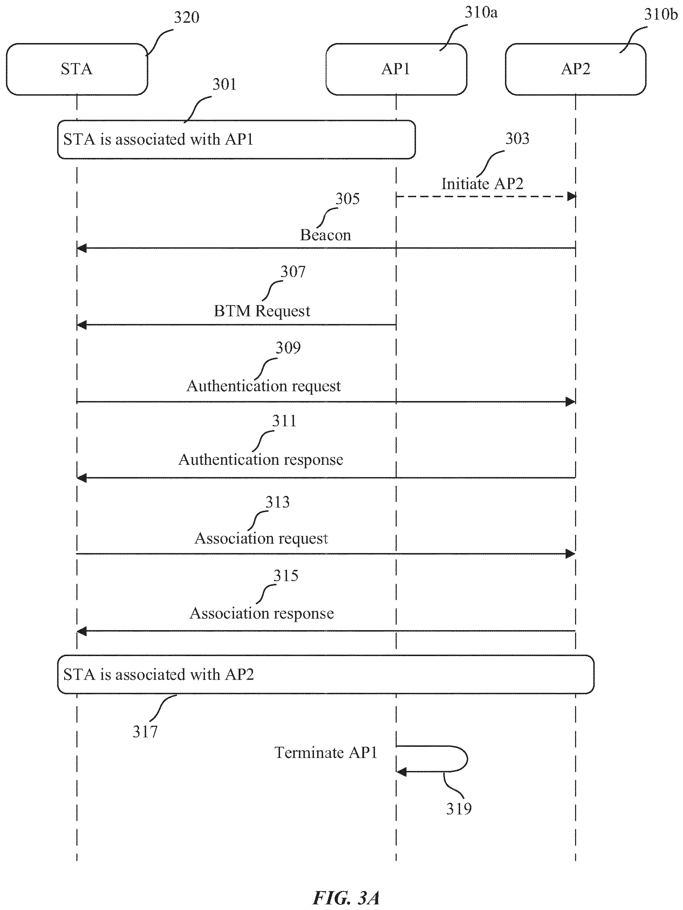

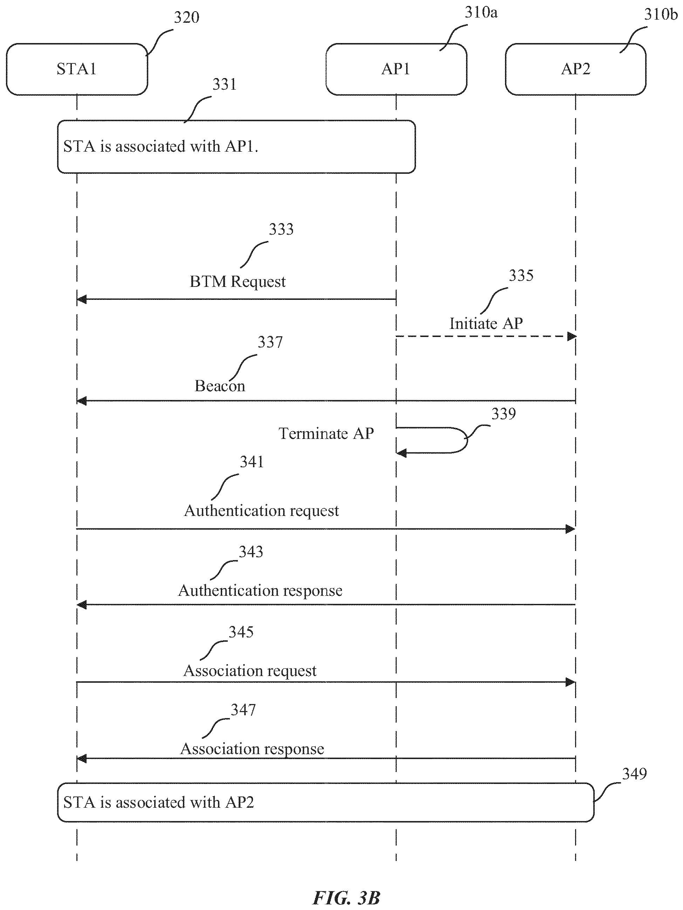

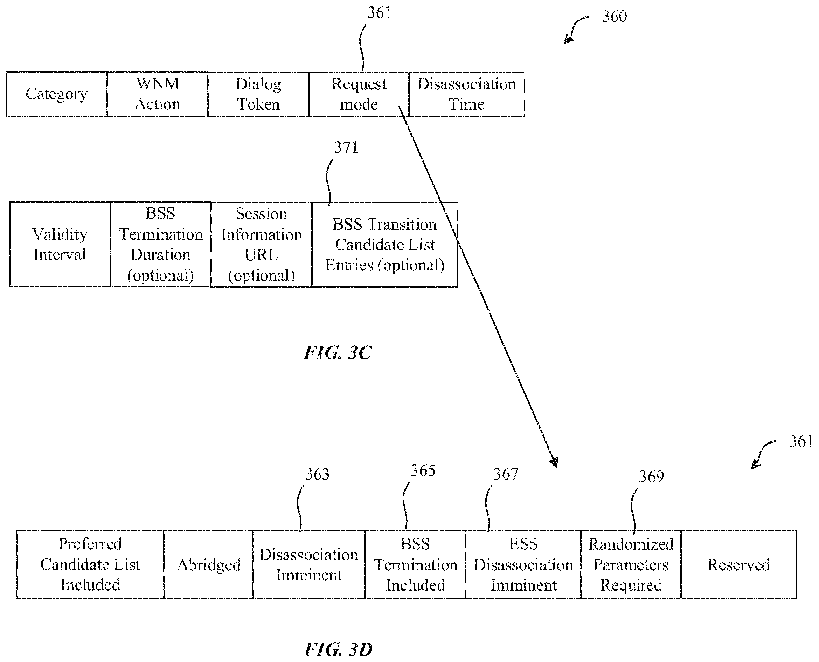

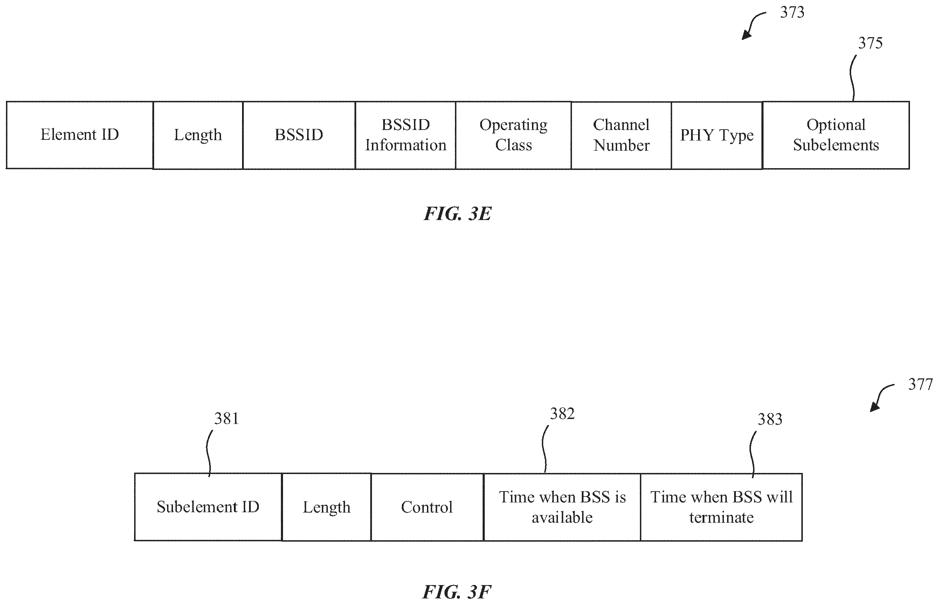

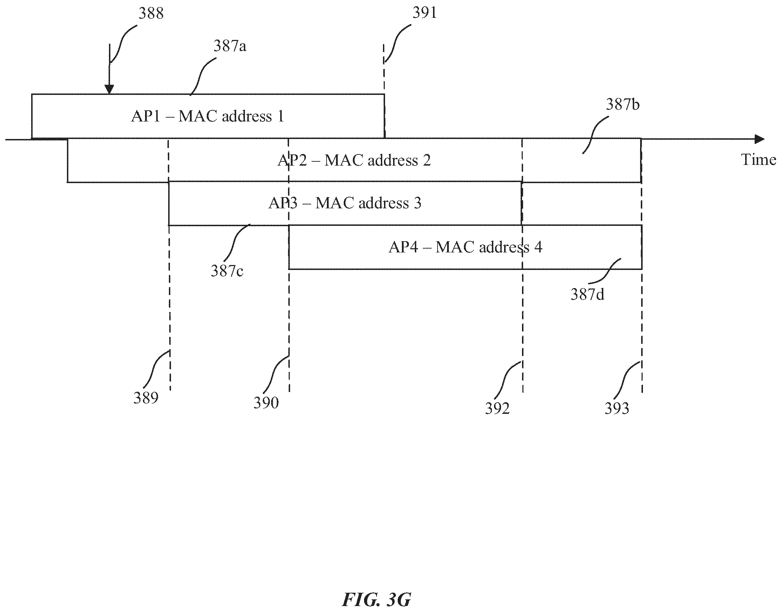

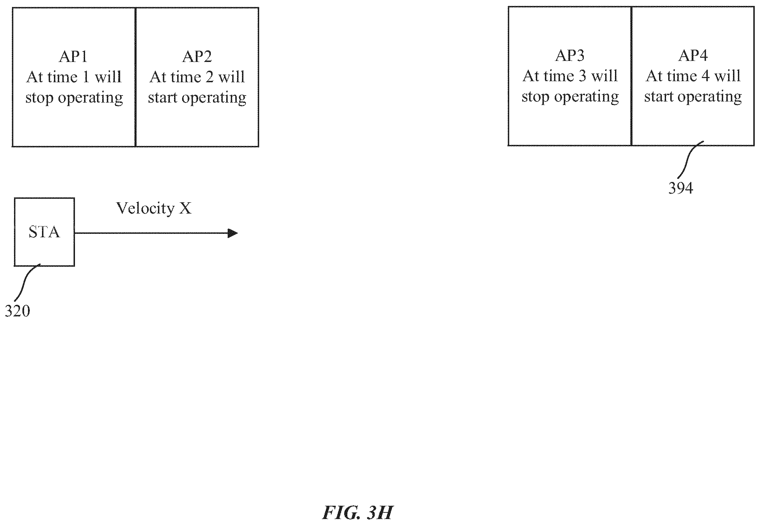

According to some aspects of this disclosure, processor 210, alone or in combination with computer instructions stored within memory 250, and/or one or more transceiver 220a-220n, implements the address and/or parameters modification for the AP and/or the STA as discussed herein. As discussed in more detail below with respect to FIGS. 3-8, processor 210 can implement the methods of this disclosure in communication network of Figure 1.

FIGS. 3A and 3B illustrate examples of communication between an access point (AP) and a station (STA), according to some aspects of the disclosure. In this example, STA 320 (e.g., a non-AP multi-link device (MLD)) can communicate with an AP 310 (e.g., an AP MLD - including AP instances 310a and 310b) using a WLAN. In some examples, AP 310 can include AP 110 and/or AP 150 of FIG. 1 and STA 320 can include one of STAs 120a-120c of FIG. 1.

In the exemplary communication of FIGS. 3A and 3B, AP 310 can be a physical AP configured to operate one or more AP instances 310a-310b. In this example, STA 320 is associated with AP instance 310a. AP 310 (using, for example, AP instance 310a) can steer the associated STA 320 to communicate with AP instance 310b that has a different address and/or different parameters compared to AP instance 310a. In this example, during the transition time (the time to transition STA 320 from AP instance 310a to AP instance 31b), AP 310 can operate two AP instances at the same time. After the transition, the STA 320 can communicate with AP 310 using AP instance 310b that has different address and/or different parameters compared with AP instance 310a.

As illustrated in FIG. 3A, during 301 STA 320 is associated with the first AP instance (AP instance 310a) of AP 310. In a non-limiting example, STA 320 and AP instance 310a can operate at the 5 GHz channel. However, the aspects of this disclosure are not limited to this channel.

At 303, AP 310 (using, for example, AP instance 310a) initiates a second AP instance (AP instance 310b). As discussed above, initiating AP instance 310b can include using the same transceiver associated with AP instance 310a to operate at the same or different channel compared to AP instance 310a. However, AP instance 310b (the new AP instance) will have different address and/or parameters compared to AP instance 310a. In this example, initiating AP instance 310b can further include determining the address and/or parameters for AP instance 310b that are different from the address and/or parameters of AP instance 310a.

Additionally, or alternatively, initiating AP instance 310b can include using a different transceiver from the transceiver associated with AP instance 310a to operate at the same or different channel compared to AP instance 310a. AP instance 310b (the new AP instance) will have different address and/or parameters compared to AP instance 310a. In this example, initiating AP instance 310b can further include determining the address and/or parameters for AP instance 310b that are different from the address and/or parameters of AP instance 310a.

In a non-limiting example, AP instance 310b can also operate at the 5 GHz channel.

According to some aspects, AP instance 310b has a different address (e.g., MAC address or Basic Service Set Identifier (BSSID)) than the address of AP instance 310a. Additionally, or alternatively, AP instance 310b can have different one or more parameters that AP instance 310a. In some examples, AP instance 310b has the same SSID as AP instance 310a, but different address and/or different parameters. Additionally, or alternatively, AP instance 310b can be available for the same devices (e.g., STAs such as STA 320) as AP instance 310a.

After AP instance 310b is initiated, AP instance 310b transmits one or more Beacons 305 to STA 320 (which is still associated with AP instance 310a). In some aspects, by sending Beacon(s) 305, AP instance 310b can signal to STA 320 that AP instance 310b is available to receive frames. For example, AP instance 310b can indicate that AP instance 310b is available to perform, for example, authentication and association procedures such that STA 320 can associate with AP instance 310b. In some aspects, Beacon(s) 305 can signal the address and/or parameters of AP instance 310b (that are different from AP instance 310a). In some examples, Beacon(s) 305 does not include the SSID of the Basic Service Set (BSS) of AP 310. STA 320 can discover AP instance 310b from Beacon(s) 305.

In some aspects, after transmitting Beacon(s) 305, AP instance 310a can transmit BSS Transition Management (BTM) request frame 307 to STA 320. In some examples, BTM request frame 307 can include information (e.g., an indicator) indicating that a transition to a second AP instance (e.g., AP instance 310b) is occurring. Additionally, or alternatively, BTM request frame 307 can include a time when the first AP instance (e.g., AP instance 310a) is terminating. Additionally, or alternatively, BTM request frame 307 can include a request for STA 320 to modify its address and/or parameters to use with AP instance 310b. In other words, BTM request frame 307 can include a request for STA 320 to use different (e.g., randomize) STA 320's address and/or parameters for communication with AP instance 310b.

After receiving BTM request frame 307, STA 320 can initiate authentication and association procedures with AP instance 310b. According to some aspects, STA 320 can use the information in BTM request frame 307 to perform the authentication and association procedures. For example, STA 320 transmits authentication request frame 309 to AP instance 310b. Authentication request frame 309 can be based on the address and parameters of AP instance 310b. Additionally, or alternatively, authentication request frame 309 can be based on modified (e.g., randomized) address and/or parameters of STA 320.

After receiving authentication request frame 309, AP instance 310b can transmit an authentication response frame 311. According to some aspects, AP instance 310b can determine whether STA 320 has changed its address and/or parameters compared to the address and/or parameters that STA 320 had used in STA 320's communication with AP instance 310a. If the address and/or parameters of STA 320 are not changed, authentication response frame 311 can include an error message, according to some aspects. In response to the error message, STA 320 can retransmit its authentication request frame 309 with modified (e.g., randomized) address and/or parameters, according to some aspects. In some examples, the error message can be used in any authentication response frame and/or association response frame to request modification of address and/or parameters by STA 320.

If the address and/or parameters of STA 320 are changed, STA 320 and AP instance 310b can move to association procedure. For example, STA 320 can transmit association request frame 313. In response, AP instance 310b can transmit association response frame 315. In some aspects, if the address and/or parameters of STA 320 are not changed, association response frame 311 (or a re-association response frame) can include an error message. In response to the error message, STA 320 can retransmit its association request frame 309 (or a re-association request) with modified (e.g., randomized) address and/or parameters, according to some aspects.

After exchanging frames 309-315 and in response to a successful authentication and association, STA 320 can associate with AP instance 310b at 317. In some examples, AP instance 310b has different address and/or parameters compared to AP instance 310a. Additionally, STA 320 can have different address and/or parameters than the address and/or parameters that STA 320 had when it was associated to AP instance 310a, according to some aspects.

According to some aspects, frames 309-315 can be part of fast BSS transition signaling between STA 320 and AP instance 310b. According to some aspects, STA 320 and AP 310b can use pre-association security to protect the authentication and/or association frames 309-315 to protect the contents of these frames from other devices. Additionally, or alternatively, STA 320 and AP 310a can use security (e.g., encoding) for communication BTM request frame 307. Although frames 313-315 are discussed with respect to the association procedure, frames 313-315 can also include re-association frames.

At 319, AP instance 310a is terminated (e.g., physical mobile AP 310 terminates its first AP instance). According to some aspects, AP instance 310a can be terminated after all associated STAs have associated with the new AP (e.g., AP instance 310b). In this example, AP instance 310b has the same number of associations as AP instance 310a and there is no frame transmissions to/from AP instance 310a. Additionally, or alternatively, AP instance 310a can be terminated after a signaled termination time of AP instance 310a. Additionally, or alternatively, AP instance 310a can be terminated after AP instance 310a has sent a disassociation frame to associated STAs (e.g., STA 320). In some examples, AP instance 310a can be terminated after any of the above example events, whichever occurs first. In some examples, the STAs (e.g., STA 320) do not disassociate from AP instance 310a.

FIG. 3B illustrates another exemplary communication between STA 320 and AP 310. The exemplary communication of FIG. 3B is similar to the exemplary communication of FIG. 3A. In the exemplary communication of FIG. 3B, the time period when both AP instances 310a and 310b operate at the same time is reduced compared to FIG. 3A.

As illustrated in FIG. 3B, during 331, STA 320 is associated with the first AP instance (AP instance 310a) of AP 310. In a non-limiting example, STA 320 and AP instance 310a can operate at the 5 GHz channel and AP instance 310b can operate at the 6 GHz channel. However, the aspects of this disclosure are not limited to this channel.

During 331, AP 310 can prepare the new AP instance (e.g., AP instance 320b) and determine a time when AP 310a is to be terminated, according to some aspects.

In some aspects, AP instance 310a can transmit BSS Transition Management (BTM) request frame 333 to STA 320. In some examples, BTM request frame 333 can include information (e.g., an indicator) indicating that a transition to a second AP instance (e.g., AP instance 310b) is occurring. Additionally, or alternatively, BTM request frame 333 can include a time when the second AP instance (e.g., AP instance 310b) is starting (e.g., being initiated). Additionally, or alternatively, BTM request frame 333 can include a time when the first AP instance (e.g., AP instance 310a) is terminating. Additionally, or alternatively, BTM request frame 333 can include a request for STA 320 to modify its address and/or parameters to use with AP instance 310b. In other words, BTM request frame 333 can include a request for STA 320 to use different (e.g., randomize) STA 320's address and/or parameters for communication with AP instance 310b.

At 335, AP 310 (using, for example, AP instance 310a) initiates a second AP instance (AP instance 310b). Initiating AP instance 310b can be similar to operations discussed above with respect to operation 303 of FIG. 3A. According to some aspects, AP instance 310b has a different address (e.g., MAC address or BSSID) than the address of AP instance 310a. Additionally, or alternatively, AP instance 310b can have different one or more parameters than AP instance 310a. In some examples, AP instance 310b has the same SSID as AP instance 310a, but different address and/or different parameters. Additionally, or alternatively, AP instance 310b can be available for the same devices (e.g., STAs such as STA 320) as AP instance 310a.

After AP instance 310b is initiated, AP instance 310b transmits one or more Beacons 337 to STA 320 (which is still associated with AP instance 310a). In some aspects, by sending Beacon(s) 337, AP instance 310b can signal to STA 320 that AP instance 310b is available to receive frames. For example, AP instance 310b can indicate that AP instance 310b is available to perform, for example, authentication and association procedures such that STA 320 can associate with AP instance 310b. In some aspects, Beacon(s) 337 can signal the address and/or parameters of AP instance 310b (that are different from AP instance 310a). In some examples, Beacon(s) 337 does not include the SSID of the BSS of AP 310. STA 320 can discover AP instance 310b from Beacon(s) 337. In some aspects, AP instance 310b may not transmit Beacon(s) 337 for a time period after AP instance 310b is initiated at 335. In this example, the associating STA 320 can use the address and/or parameters provided in the BTM request frame to associate (or re-associate.)

After Beacon(s) 337 are transmitted, AP 310 can terminate its AP instance 310a at 339.

Next, STA 320 can initiate authentication and association procedures with AP instance 310b. According to some aspects, STA 320 can use the information in BTM request frame 333 to perform the authentication and association procedures. In some aspects, the authentication procedure can include authentication request frame 341 and authentication response frame 343. Authentication request frame 341 and authentication response frame 343 can be similar to authentication request frame 309 and authentication response frame 311 of FIG. 3A, according to some aspects. Additionally, the association procedure can include association request frame 345 and authentication response frame 347. Association request frame 345 and association response frame 347 can be similar to association request frame 313 and association response frame 315 of FIG. 3A, according to some aspects.

For example, STA 320 transmits authentication request frame 341 to AP instance 310b. Authentication request frame 341 can be based on the address and parameters of AP instance 310b. Additionally, or alternatively, authentication request frame 341 can be based on modified (e.g., randomized) address and/or parameters of STA 320.

After exchanging frames 341-347 and in response to a successful authentication and association, STA 320 can associate with AP instance 310b at 349. In some examples, AP instance 310b has different address and/or parameters compared to AP instance 310a. Additionally, STA 320 can have different address and/or parameters than the address and/or parameters that STA 320 had when it was associated to AP instance 310a, according to some aspects. According to some aspects, frames 341-347 can be part of fast BSS transition signaling between STA 320 and AP instance 310b. According to some aspects, STA 320 and AP 310b can use pre-association security to protect the authentication and/or association frames 341-347 to protect the contents of these frames from other devices. Additionally, or alternatively, STA 320 and AP 310a can use security (e.g., encoding) for communication BTM request frame 333. Although frames 313-315 are discussed with respect to the association procedure, frames 345-347 can also include re-association frames.

FIGS. 3C-3F illustrate an exemplary BTM request frame format, according to some aspects of the disclosure. According to some aspects, BTM request frame 307 of FIG. 3A and BTM request frame 333 of FIG. 3B can have BTM request frame format of FIGS. 3C-3F.

According to some aspects, the BTM signaling can allow an STA (e.g., STA 320) to query candidate BSSs for BSS transition by sending a BTM query frame. The BTM query frame can be an optional frame. If the BTM query frame is transmitted, the AP (e.g., AP 310) can respond with the BTM request frame. As discussed above, the AP can use the BTM request frame to request the STA to transition to a new BSS and/or the AP can indicate the termination of a current AP instance. The STA can respond to the BTM request frame by sending a BTM response frame. The BTM response frame can indicate whether the STA accepts the AP's request.

According to some aspects, BTM request frame 360 can include request mode field 361. Request field mode 361 can include one or more subfields as illustrated in FIG. 3D. For example, request mode field 361 can include disassociation imminent subfield 363, BSS termination included subfield 365, and extended service set (ESS) termination included subfield 367. According to some examples, an ESS can include one or more interconnected BSSs and their associated LANs. In some examples, if disassociation imminent subfield 363 is set to a first value (e.g., "1"), the AP can signal to the STA that the AP is going to terminate the STA. In some examples, if BSS termination included subfield 365 is set to a first value (e.g., "1"), the AP can signal to the STA that the BSS is going to be terminated. In some examples, if ESS termination included subfield 367 is set to a first value (e.g., "1"), the AP can signal to the STA that the ESS is going to be terminated. In some examples, if any of these subfields (e.g., subfields 363-367) is set to 1, the AP (using the BTM request frame 360) can also provide a time when the termination/disassociation will occur.

According to some aspects, request mode field 361 can include randomized parameters required subfield 369. The AP (e.g., AP 310) can use randomized parameters required subfield 369 of BTM request frame 360 to request the STA (e.g., STA 320) to modify (e.g., randomize) its address and/or parameters when the STA is transitioning to a new AP instance. For example, the AP can set randomized parameters required subfield 369 to a first value (e.g., "1") to request the STA to modify its address and/or parameters when the STA is transitioning to a new AP instance. In some examples, the STA is recommended to make the changes even if randomized parameters required subfield 369 is set to a second value (e.g., "0").

In a non-limiting example, each of subfields 363-369 can have a length of 1 bit. However, the aspects of this disclosure are not limited to this example and other lengths can be used for subfields 363-369.

According to some aspects, BTM request frame 360 can include BSS transition candidate list entries field 371. In some examples, BSS transition candidate list entries field 371 can be an optional subfield. According to some aspects, BSS transition candidate list entries field 371 can include zero or more neighbor report element. An exemplary neighbor report element 373 is illustrated in FIG. 3E. Neighbor report element 373 can include one or more subfields such as optional subelements subfield 375. In some examples, optional subelements subfield 375 can have a variable length. According to some aspects, optional subelements subfield 375 can include one or more subelement ID, name, and extensible subfields. In a non-limiting example, subelement ID of optional subelements subfield 375 having a first value (e.g., subelement ID=3) can be used to communicate the preference (e.g., 0-255) how suitable the AP considered a BSS to be for the STA.

FIG. 3F illustrates one exemplary subelement 377 of optional subelements subfield 375 of neighbor report element 373, according to some aspects. Subelement 377 can include subelement ID subfield 381. In a non-limiting example, subelement ID subfield 381 can have subelement IDs between 63 and 65 in optional subelements subfield 375. However, subelement ID subfield 381 can include other values. Subelement 377 can be used (e.g., by the AP) to signal the start time and termination time of a BSS. For example, subelement 377 can include time when BSS is available subfield 382 indicating when the BSS is available. Subelement 377 can include time when BSS will terminate subfield 383 indicating when the BSS is terminated.

As discussed above, the AP (e.g., AP instance 310a) can send the BTM request frame (e.g., frames 307 or 333) to request the associated STA (e.g., STA 320) to switch to a new AP (e.g., AP instance 310b). Subelement 377 of neighbor report element 373 can signal the time when the candidate BSS becomes available and/or when it will terminate. In some examples, neighbor report element 373 can also include a set of parameters of the new AP including, but not limited to, the SSID and/or BSSID of the new AP. The associated STA (e.g., STA 320) can scan and/or associate to the new AP after the new AP becomes available. The STA may select the scanning order based on the times when BSSs (e.g., the new APs) are available.

In some examples, some candidate APs may be available only after the associated AP (the AP to which the STA is associated) is terminated. If the STA desires to associate with such candidate AP, the STA may suffer from loss of connectivity. In some examples, the BTM request frame can recommend all BSSs (e.g., APs) with the score 0-255. The STA may delay its transition to an AP, if some APs that are higher preference score are started later to avoid too frequent AP transition.

In some examples, the STA may have a capability of supporting subelement 377 of neighbor report element 373. In these examples, the AP includes subelement 377 only to STAs that support the feature. The legacy STAs that do not support the feature can only use the available BSSs (e.g. APs).

FIG. 3G illustrates an exemplary availability and termination of multiple APs, according to some aspects of the disclosure. FIG. 3G illustrates the duration of availability of AP1 (with MAC address 1) 387a, the duration of availability of AP2 (with MAC address 2) 387b, the duration of availability of AP3 (with MAC address 3) 387c, and the duration of availability of AP4 (with MAC address 4) 387d. In this example, a BTM request frame can be transmitted at time 388. In some examples, the BTM request frame can include time 389 when AP3 387c is available. The BTM request frame can further include time 390 when AP4 387d is available. The BTM request frame can further include time 391 when AP1 387a is terminated. The BTM request frame can further include time 392 when AP3 387c is terminated. The BTM request frame can further include time 393 when AP4 387d is terminated.

As discussed above, the AP (e.g., AP instance 310a) uses the BTM request frame to transition the associated STA (e.g., STA 320) to a new AP (e.g., AP instance 310b). In some examples, the AP does not include APs that will terminate soon in BSS transition candidate list entries field 371. In some examples, such AP (AP that will terminate soon) may be included only if there is no other AP available. In some examples, the AP (e.g., AP instance 310a) can set preferences according to the current STA link performance, expected and/or measured velocity of the STA, currently available BSSs, and/or BSSs that will be available in future. For example, as illustrated in FIG. 3H, the AP may estimate that STA 320 is in AP4 394 (e.g., AP instance) coverage when the AP4 394 starts operating. Therefore, the AP can recommend AP4 394 to STA 320 using the BTM request frame. The AP can make the estimation based, at least on, the velocity of STA 320 and the starting and stopping times of the AP instances.

Returning to FIG. 1, system 100 can include two physical APs (e.g., AP 110 and AP 150), according to some aspects. In some examples, AP 110 and AP 150 can belong to the same network (e.g., having same network ID, for example, SSID). According to some aspects, STA 120a, which is associated with AP 110, can transition to AP 150. For example, STA 120a can transition to communication 140d with AP 150 from communication 140a with AP 110. In some examples, STA 120a can operate with the same address (e.g., MAC address) for association duration with AP 110 and for when STA 120a transitions (e.g., BSS transition) to AP 150. In this example, AP 150 can detect the associated STA 120a from its address. The same address can allow STA 120a to continue operating with same IP address, according to some examples.

According to some aspects, STA 120a can be able to modify (e.g., randomize) its address and/or parameter(s) when STA 120a transitions to AP 150. STA 120a can be configured to signal its modified address and/or parameter(s) and use the modified address and/or parameter(s) to scan and/or associate with AP 150. As discussed in more detail below, some aspects of this disclosure can enable STA 120a to modify its address and/or parameter(s) to improve privacy of system 100. Additionally, or alternatively, STA 120a can be configured to maintain its IP address and connectivity as is with associated AP 110. Additionally, or alternatively, STA 120a can be configured to maintain the service level as defined for system 100. STA 120a can also use the authentication information that is created for the associated AP 110. Additionally, or alternatively, system 100 can steer STA 120a to appropriate AP (e.g., the system 100 can know that scanning frames are coming from an associated STA 120a). Some aspects of this disclosure are directed to methods and systems for STA 120a to change its address and/or parameter(s) in transitioning from AP 110 to AP 150.

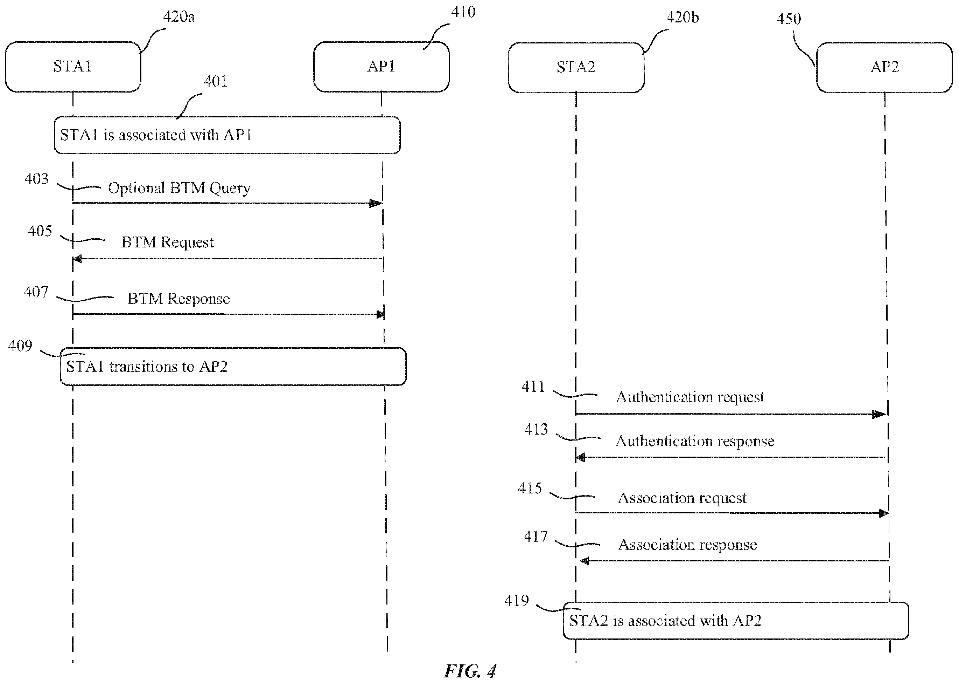

FIG. 4 illustrates an example communication between two access points (APs) and a station (STA), according to some aspects of the disclosure. In this example, STA 420 (e.g., a non-AP MLD - including STA instances 420a and 420b) can communicate with AP 410 (e.g., an AP MLD) and AP 450 (e.g., an AP MLD) using a WLAN. In some examples, AP 410 can include AP 110 and AP 450 can include AP 150 of FIG. 1 and STA 420 can include one of STAs 120a-120c of FIG. 1.

In the exemplary communication of FIG. 4, APs 410 and 450 can be physical APs. In this example, STA 420 can be configured to operate one or more STA instances 420a-420b. As illustrated in FIG. 4, during 401, STA instance 420a is associated with AP 410. In this example, STA instance 420a can include an address (e.g., a MAC address) and a set of one or more parameters for STA 420.

According to some aspects, during 401, STA 420 (e.g., using STA instance 420a) decides to transition to AP 450 and determines to modify (e.g., randomize) its address and/or parameters for the transition. During 401, AP 410 can also identify one or more candidate APs (e.g., AP 450) for transitioning.

According to some aspects, STA 420 can initiate a second STA instance (e.g., STA instance 420b). Initiating STA instance 420b can include using the same transceiver associated with STA instance 420a to operate at the same or different channel compared to STA instance 420a. However, STA instance 420b (the new STA instance) will have different address and/or parameters compared to STA instance 420a. In this example, initiating STA instance 420b can further include determining the address and/or parameters for STA instance 420b that are different from the address and/or parameters of STA instance 420a.

Additionally, or alternatively, initiating STA instance 420b can include using a different transceiver from the transceiver associated with STA instance 420a to operate at the same or different channel compared to STA instance 420a. STA instance 420b (the new STA instance) will have different address and/or parameters compared to STA instance 420a. In this example, initiating STA instance 420b can further include determining the address and/or parameters for STA instance 420b that are different from the address and/or parameters of STA instance 420a.

STA instance 420a optionally transmits BTM query frame 403 to AP 410. According to some aspects, optional BTM query frame 403 can include the modified address and/or parameter(s) of STA instance 420a that STA instance 420b will use for association with AP 450. Additionally, or alternatively, BTM query frame 403 can include candidate APs (e.g., a candidate BSS list) that STA 420 is interested in. Additionally, or alternatively, BTM query frame 403 can include a query from STA 420 on what APs are recommended by the network.

AP 410 can transmit BTM request frame 405 to STA instance 420a. According to some aspects, BTM request frame 405 can be similar to BTM request frames discussed above with respect to FIGS. 3A-3H. In some examples, BTM request frame 405 can include a BSS transition candidate list field (e.g., field 371 of FIG. 3C) and/or operating schedules of one or more APs (e.g., AP 450).

STA instance 420a can transmit BTM response frame 407 to AP 410. In some examples, BTM response frame 407 can include address and/or parameters of STA instance 420b in a case that AP 410 has sent unsolicited BTM request frame 405 and requests that STA 420 to change its AP.

During 409, STA 420 uses its modified (e.g., randomized) address and/or parameters to transition to AP 450. AP 450 can be able to use the modified address and/or parameters to identify STA instances 420a and/or 420b. In some examples STA 420 can use fast BSS transition by using the signaled modified address and/or parameters to transition to AP 450.

According to some aspects, after the transition, the AP 450 may communicate with a Dynamic Host Configuration Protocol (DHCP) server to release the lease of the old address and lease the new (e.g., modified) address. In some examples, STA identifier can allow the network to identify STA 420. In some examples, service level agreements and the like can be maintained for STA 420.

Next, STA instance 420b can initiate authentication and association procedures with AP 450. According to some aspects, STA instance 420b can use the information in BTM request frame 405 to perform the authentication and association procedures. In some aspects, the authentication procedure can include authentication request frame 411 and authentication response frame 413. Authentication request frame 411 and authentication response frame 413 can be similar to authentication request frame 309 and authentication response frame 311 of FIG. 3A, according to some aspects. Additionally, the association procedure can include association request frame 415 and authentication response frame 417. Association request frame 415 and association response frame 417 can be similar to association request frame 313 and association response frame 315 of FIG. 3A, according to some aspects. In some examples, frames 411-415 can use the modified (e.g., the randomized) address and/or parameters of STA instance 420b and address and/or parameters of AP 450.

During 419, STA instance 420b has transitioned to and is associated with AP 450.

According to some aspects, an STA (e.g., STA 420) can define scanning addresses and association addresses for an AP (AP 410 and/or AP 450). For example, the STA can use random (or substantially random) address or the scanning address for pre-association discovery (e.g., active scanning, service discovery, GAS requests, and the like). In some examples, a scanning address identifies an STA and allows the STA to provide a response that is optimal for the STA. In some examples, a scanning address can be used only one time, so that attacker devices cannot use the same address to get more information of the network. In some examples, an association address can identify the STA in authentication and association request frames. In some examples, the STA can setup multiple association addresses, and each address is good for one association/authentication attempt.

According to some aspects, the STA can setup scanning addresses and authentication addresses separately for different channels or limit the addresses to be valid only on selected channels. In some examples, the addresses may have a lifetime. In some examples, the addresses may be BSS/ESS or AP specific or channel specific.

According to some aspects, the STA may use random address for scanning or authentication/association even if the STA has setup the addresses.

According to some aspects, one or more addresses of a set of STA scanning addresses that are setup between the time the BTM query frame is transmitted and the BTM request frame is received can be addresses that are proposed but not yet confirmed. In this example, one or more addresses of the set of STA scanning addresses that are setup after the BTM request frame is received can be addresses that are confirmed.

Similarly, one or more addresses of a set of STA association addresses that are setup between the time the BTM query frame is transmitted and the BTM request frame is received can be addresses that are proposed but not yet confirmed. In this example, one or more addresses of the set of STA association addresses that are setup after the BTM request frame is received can be addresses that are confirmed.

Although FIGS. 3A-3H are discussed separately from FIG. 4, the aspects of the disclosures of these figures can be combined.

In addition to, or in alternative to, the methods discussed above, an AP (e.g., AP 110) can maintain one AP instance at a time and the AP can switch channels and determine (e.g., select, randomize) new address and/or parameter(s) for the AP. The AP can also request the associated STA to determine (e.g., select) new address and/or parameter(s). In some examples, the AP maintains one AP instance at a time and the channel switch can be done at the same time (or substantially at the same time) for the AP and the STA. In some examples, the STA can use the same association to operate with AP in the new channel.

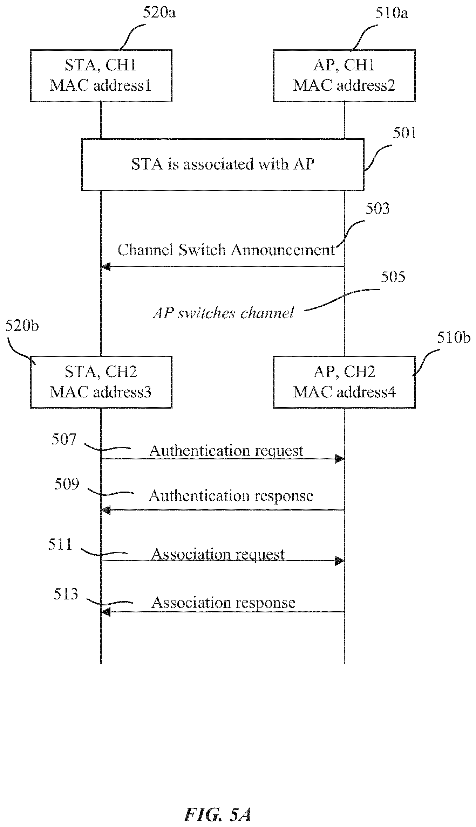

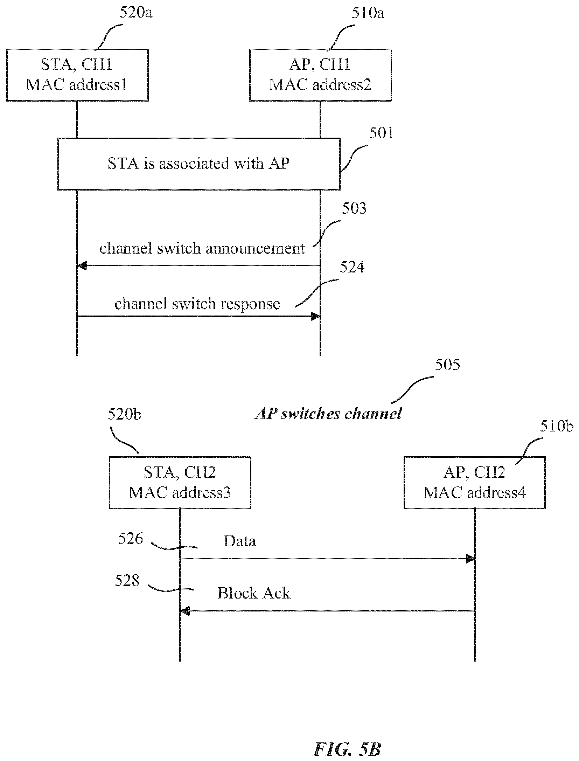

FIGS. 5A and 5B illustrate exemplary communication between an AP and an STA with channel switch, according to some aspects of the disclosure. In this example, STA 520 (e.g., a non-AP MLD) can communicate with an AP 510 (e.g., an AP MLD) using a WLAN. STA 520 can include STA instances 520a and 520b, where one STA instance operates at a time. AP 510 can include AP instances 510a and 510b, where one AP instance operates at a time. In some examples, AP 510 can include AP 110 and/or AP 150 of FIG. 1 and STA 520 can include one of STAs 120a-120c of FIG. 1.

As illustrated in FIGS. 5A and 5B, STA 520 can include STA instance 520a that has a first address (e.g., MAC address) and a first set of one or more parameters and operates at a first channel. STA 520 can initiate STA instance 520b that will have a second address different from the first address and/or will have a second set of one or more parameters different from the first set of parameters. STA instance 520b will operate at a second channel that is different from the first channel, according to some aspects. Initiating STA instance 520b can be similar to operations discussed above with respect to FIG. 4, according to some aspects. As illustrated in FIGS. 5A and 5B, STA 520 maintains one STA instance (e.g., STA instance 520a or STA instance 520b) at each time, according to some aspects.

Similarly, as illustrated in FIGS. 5A and 5B, AP 510 can include AP instance 510a that has a third address (e.g., MAC address) and a third set of one or more parameters and operates at the first channel. AP 510 can initiate AP instance 510b that will have a fourth address different from the third address and/or will have a fourth set of one or more parameters different from the third set of parameters. AP instance 510b will operate at the second channel that is different from the first channel, according to some aspects. Initiating AP instance 510b can be similar to operations discussed above with respect to FIGS. 3A-3H, according to some aspects. As illustrated in FIGS. 5A and 5B, AP 510 maintains one AP instance (e.g., AP instance 510a or AP instance 510b) at each time, according to some aspects.

As illustrated in FIG. 5A, during 501, STA 520 (e.g., using STA instance 520a) is associated with AP 510 (using AP instance 510a). STA instance 520a and AP instance 510a can communicate with each other over the first channel. AP 510 may use channel switch to improve the privacy of its network. For example, AP instance 510a can send channel switch announcement frame 503 to AP instance 520a to announce channel switch. In some examples, channel switch announcement frame 503 can include one or more of information associated with a new channel (e.g., the second channel), the new address of AP instance 520b, the new parameter(s) of AP instance 520b, and the like. Additionally, or alternatively, channel switch announcement frame 503 can include an indication whether STA 520 may continue to operate associated with its old address and/or old parameters in the second channel. Additionally, or alternatively, channel switch announcement frame 503 can include a request to STA 520 to determine new address and/or new parameters for communicating with AP instance 510b on the new channel. According to some aspects, channel switch announcement frame 503 can include a time when STA 520 is to stop operating with AP instance 510a. In some examples, AP 510 may use broadcast signaling for channel switch announcement frame 503. Alternatively, AP 510 may use unicast signaling for channel switch announcement frame 503.

According to some aspects, during 505, AP 510 determines its new address (e.g., the fourth address discussed above) and/or its new parameter(s) (e.g., the fourth parameters discussed above) to initiate AP instance 510b. AP 510 also switches to the new channel (e.g., the second channel discussed above). Similarly, during 505, STA 520 determines its new address (e.g., the second address discussed above) and/or its new parameter(s) (e.g., the second parameters discussed above) to initiate STA instance 520a. STA 520 also switches to the new channel (e.g., the second channel discussed above).

After the transition to the new channel (e.g., the second channel), STA instance 510b can use fast BSS transition signaling to start operating with AP instance 520b. For example, STA instance 520b can initiate authentication and association procedures with AP instance 510b. According to some aspects, STA instance 520b can use the information in channel switch announcement frame 503 to perform the authentication and association procedures. In some aspects, the authentication procedure can include authentication request frame 507 and authentication response frame 509. Authentication request frame 507 and authentication response frame 509 can be similar to authentication request frame 309 and authentication response frame 311 of FIG. 3A, according to some aspects. Additionally, the association procedure can include association request frame 511 and authentication response frame 513. Association request frame 511 and association response frame 513 can be similar to association request frame 313 and association response frame 315 of FIG. 3A, according to some aspects. In some examples, frames 507-513 can use the new (e.g., the randomized) address and/or parameters of STA instance 520b and the new (e.g., the randomized) address and/or parameters of AP instance 510b.

After STA instance 510b is associated with AP instance 520b, STA instance 510b and AP instance 520b can communicate with each other over the new channel (e.g., the second channel).

FIG. 5B illustrates another exemplary communication between STA 520 and AP 510 with channel switch. Similar operations and devices as FIG. 5A are illustrated with same numerals in FIG. 5B. In some examples, after receiving channel switch announcement frame 503, STA 520 may ignore the channel switch. If STA 520 wants to continue operating with AP 510, STA 520 may authenticate and associate again with the AP instance 510b after the channel switch. Alternatively, as illustrated in FIG. 5B, STA 520 (using STA instance 520a) can send an optional channel switch response 524 to AP instance 510a. According to some aspects, channel switch response 524 can include the new address (e.g., the second address discussed above) and/or the new parameters (e.g., the second parameters discussed above) that STA 520 will use in the new channel (e.g., the second channel).

In some examples, AP 510 can automatically accept the new address and/or the new parameters of STA 520. In some examples, if AP 510 detects that the new address and/or the new parameters of STA 520 would conflict with some other address and/or parameters, AP 510 may disassociate with STA 520 and send a conflict message to STA 520. The disassociation and/or the conflict message can trigger STA 520 to retry association with AP 510.

After AP instance 510b and STA instance 510b are initiated and they switch to the new channel, AP instance 510b and STA instance 510b can communicate with each other without the need to perform authentication and association procedures of FIG. 5A, according to some aspects. For example, STA instance 520b can start transmitting data 526 to AP instance 510b. And AP instance 510b can start transmitting block Ack 528 to STA instance 520b.

As discussed above, AP 510 and/or STA 520 can modify (e.g., randomize) one or more parameters of AP 510 and/or STA 510, respectively. As discussed above, the one or more parameters that can be modified can include, but are not limited to, parameters associated with management frames, parameters associated with security modes, parameters associated with block Ack, parameters associated with Beacons and/or other frames, parameters associated with MAC address, TSF, Sequence numbers of the PPDUs, Dialog token values to identify management frames, scrambler seeds in PHY preambles, and the like. However, the one or more parameters that can be modified can include other parameters such as any parameter that can be used to trace AP 510 and/or STA 520.

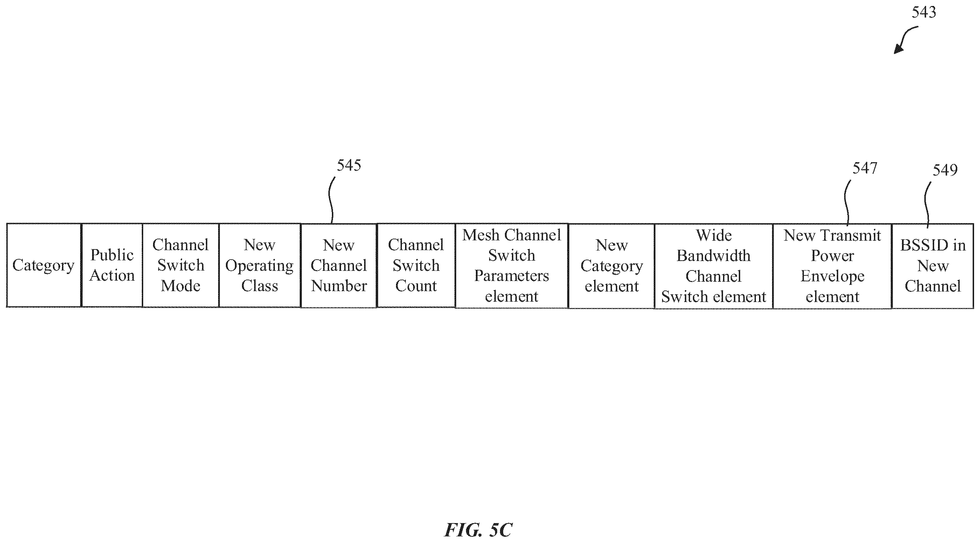

FIG. 5C illustrates an exemplary channel switch frame format, according to some aspects of the disclosure. Channel switch frame 543 can include channel switch frame 503 of FIGS. 5A and 5B. Channel switch frame 543 can include one or more fields as illustrated in FIG. 5C. According to some aspects, channel switch frame 543 can include new channel number field 545 indicating the new channel to which the channel switch is occurring. Additionally, or alternatively, channel switch frame 543 can include new transmit power envelop element 545 indicating a maximum transmission power in the new channel. Additionally, or alternatively, channel switch frame 543 can include BSSID in new channel field 547 indicating the address (e.g., MAC address) that the new AP instance will use in the new channel. In some examples, if the STA (e.g., STA 520) detects BSSID in new channel field 547 in channel switch frame 543, the STA can send channel switch response frame 524. As discussed above, channel switch response frame 524 can include the new address and/or the new parameters that the STA will use in the new channel.

According to some aspects, the AP can consider different parameters for scheduling address and/or parameter(s) update for the AP and the STA. According to some aspects, the AP can schedule the update at random (or substantially random) times. In a non-limiting example, the AP can schedule the update in an order of about 5 to about 10 minutes. However, the aspects of this disclosure can include any other time intervals. According to some aspects, the AP can schedule the update by considering how long the AP has been operating and how long the STA(s) has been associated with the AP. Additionally, or alternatively, the AP can schedule the update by considering the number of associated STAs. Additionally, or alternatively, the AP can schedule the update by considering the location of the AP and/or the mobility of the AP. Additionally, or alternatively, the AP can schedule the update by considering the associated STA(s) link performance. Additionally, or alternatively, the AP can schedule the update by considering quality of service (QoS) of transmitted traffic types.

According to some aspects, the AP can signal each address/parameter update operation separately. Additionally, or alternatively, the AP can schedule a next address/parameter update operation time to the associated STA(s). In some examples, the associated STA(s) can get the time for address/parameter update and the new address/parameters of the AP so they can associated and/or maintain link with the AP.

According to some aspects, the AP can select AP address/parameter update mode. For example, the AP may randomly (or substantially randomly) select between channel switch (e.g., FIGS. 5A-5C) or new AP instance creation and transition (e.g., FIGS. 3A-3H and 4).

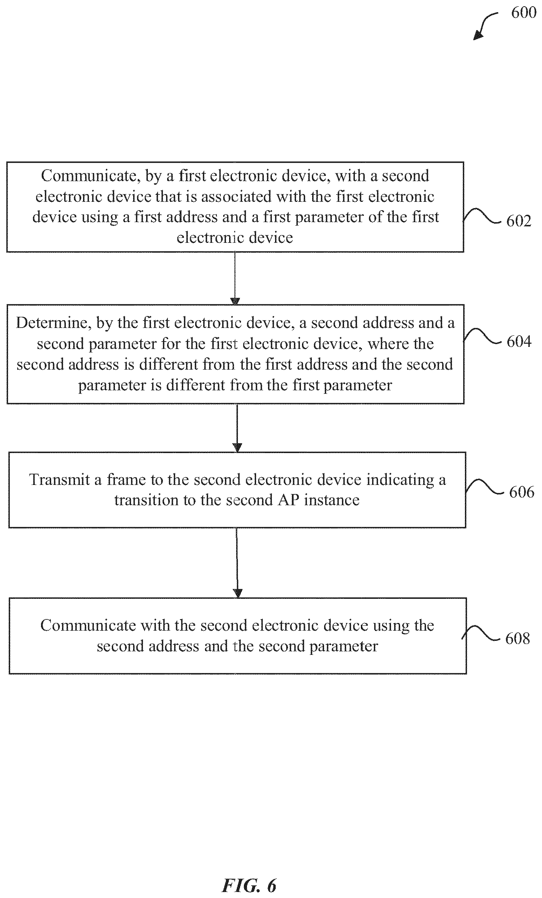

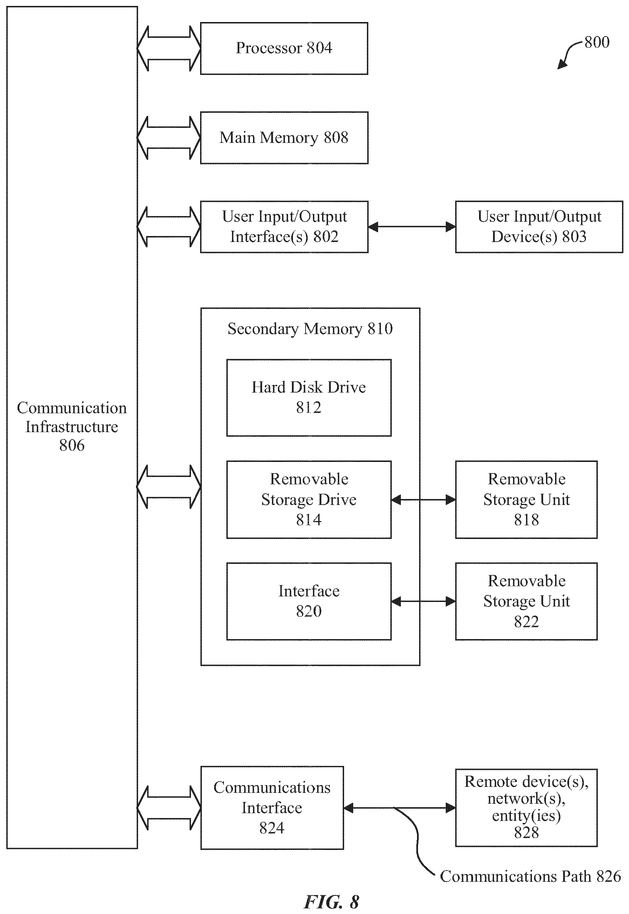

FIG. 6 illustrates an example method 600 for a wireless system supporting and implementing address and parameter modifications for an AP and/or an STA, according to some aspects of the disclosure. As a convenience and not a limitation, FIG. 6 may be described with regard to elements of FIGS. 1-5. Method 600 may represent the operation of an electronic device (e.g., an AP as discussed in this disclosure) implementing address and parameter modifications for an AP and/or an STA. Method 600 may also be performed by system 200 of FIG. 2 and/or computer system 800 of FIG. 8. But method 600 is not limited to the specific aspects depicted in those figures and other systems may be used to perform the method as will be understood by those skilled in the art. It is to be appreciated that not all operations may be needed, and the operations may not be performed in the same order as shown in FIG. 6.

At 602, a first electronic device (e.g., an AP) communicates with a second electronic device (e.g., a STA) that is associated with the first electronic device using a first address and a first parameter of the first electronic device. According to some aspects, the second electronic device is associated with a first AP instance of the first electronic device.

At 604, the first electronic device (e.g., the AP) determines a second address and a second parameter for the first electronic device. The second address is different from the first address and/or the second parameter is different from the first parameter, according to some aspects. According to some aspects, the second address and the second parameter are for a second AP instance of the first electronic device.

At 606, the first electronic device (e.g., the AP) transmits a frame to the second electronic device (e.g., the STA) to indicate that a transition is occurring from the first AP instance to the second AP instance. In some examples, the frame is a BTM request frame. In some examples, the frame is a channel switch announcement frame.

At 608, the first electronic device (e.g., the AP) communicates with the second electronic device (e.g., the STA) using the second address and the second parameter.

According to some aspects, and as discussed above with response to FIG. 3A, before determining the second address and the second parameter at 604, the first electronic device (e.g., the AP) is configured to communicate with the second electronic device (e.g., the STA) using the first AP instance of the first electronic device. In this example, operation 604 can further include initiating the second AP instance of the first electronic device. In this example, method 600 can further include transmitting, using the second AP instance, a beacon to the second electronic device, where the second address and the second parameter are associated with the second AP instance and the beacon include the second address and the second parameter. Operation 606 can include transmitting, using the first AP instance, a BTM request frame to the second electronic device. In this example, operation 600 can include performing, using the second AP instance, an association procedure using the second address and the second parameter. Method 600 can further include terminating the first AP instance of the electronic device.

In some examples, the BTM request frame can include at least one of a notification that the first electronic device is transitioning to the second AP instance, information associated with a time when the second AP instance is initiated, a request for the second electronic device to modify an address and one or more parameters of the second electronic device, or information associated with a time when the first AP instance is terminated.

In some examples, the first AP instance of the first electronic device (e.g., the AP) is associated with a transceiver operating at a first channel and the second AP instance is initiated using the transceiver operating at the first channel. Additionally, or alternatively, the first AP instance is associated with the transceiver operating at a first channel and the second AP instance is initiated using the transceiver operating at a second channel. Additionally, or alternatively, the first AP instance is associated with the transceiver and the second AP instance is initiated using a second transceiver of the first electronic device.

In another example, and as discussed above with response to FIG. 3B, before determining the second address and the second parameter at 604, the first electronic device (e.g., the AP) can communicate with the second electronic device using the first AP instance of the first electronic device. In this example, method 600 can further include transmitting, using the first AP instance, a BTM request frame to the second electronic device. Operation 604 can further include initiating the second AP instance of the first electronic device. Method 600 can further include transmitting, using the second AP instance, a beacon to the second electronic device. The second address and the second parameter are associated with the second AP instance and the beacon can include the second address and the second parameter. Operation 606 can include terminating the first AP instance of the first electronic device. In this example, operation 608 can also include performing, using the second AP instance, an association procedure using the second address and the second parameter.

According to some aspects, and as discussed above with response to FIG. 4, before determining the second address and the second parameter at 604, the first electronic device (e.g., a first physical AP) can communicate with the second electronic device (e.g., the STA). Method 600 can further include receiving an optional BTM query frame from the second electronic device and transmitting a BTM request frame to the second electronic device. The BTM request frame can include at least one of a notification that the second electronic device is to transition to a second physical AP, information associated with a time when the second physical AP is available, a request for the second electronic device to modify an address and one or more parameters of the second electronic device, or information associated with a time when the first physical AP instance is unavailable. Method 600 can further include receiving a BTM response frame from the second electronic device. BTM response frame can include address and/or parameters (or modified address and/or parameters) of the second electronic device. Method 600 can further include the second electronic device transitioning to associate with the second physical AP. In this example, operation 608 can further include performing authentication and/or association procedures between the second electronic device and the second physical AP. In this example, operation 608 can further include the second electronic device associating with the second physical AP.

According to some aspects, and as discussed above with response to FIG. 5A, before determining the second address and the second parameter at 604, the first electronic device can communicate with the second electronic device using the first AP instance of the first electronic device operating at a first channel. In this example, operation 604 can further include selecting a second channel, different from the first channel, for operating the second AP instance. Operation 606 can include transmitting, using the first AP instance, a frame to the second electronic device. The frame can include the second address and the second parameter and the second channel. Method 600 can further include switching the operation of the AP to the second AP instance on the second channel and performing, using the second AP instance operating at the second channel, an association procedure with the second electronic device using the second address and the second parameter.

According to some aspects, and as discussed above with response to FIG. 5B, before determining the second address and the second parameter at 604, the first electronic device can communicate with the second electronic device using the first AP instance of the first electronic device operating at a first channel. In this example, operation 604 can further include selecting a second channel, different from the first channel, for operating the second AP instance. Operation 606 can include transmitting, using the first AP instance, a frame to the second electronic device. The frame can include the second address and the second parameter and the second channel. Method 600 can further include receiving, using the first AP instance operating at the first channel, a response frame from the second electronic device. The response frame can include a modified address and a modified parameter of the second electronic device. Method 600 can further include communicating with the second electronic device using the second AP instance operating at the second channel with the second address and the second parameter.

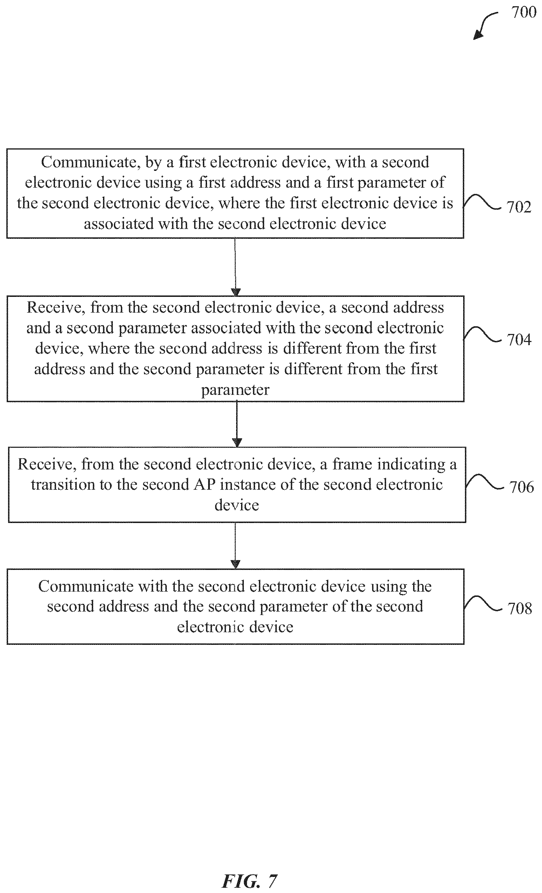

FIG. 7 illustrates an example method 700 for a wireless system supporting and implementing address and parameter modifications for an AP and/or an STA, according to some aspects of the disclosure. As a convenience and not a limitation, FIG. 7 may be described with regard to elements of FIGS. 1-5. Method 700 may represent the operation of an electronic device (e.g., an STA as discussed in this disclosure) implementing address and parameter modifications for an AP and/or an STA. Method 700 may also be performed by system 200 of FIG. 2 and/or computer system 800 of FIG. 8. But method 700 is not limited to the specific aspects depicted in those figures and other systems may be used to perform the method as will be understood by those skilled in the art. It is to be appreciated that not all operations may be needed, and the operations may not be performed in the same order as shown in FIG. 7.

At 702, a first electronic device (e.g., an STA) communicates with a second electronic device (e.g., an AP) using a first address and a first parameter of the second electronic device. In some examples, the first electronic device is associated with the second electronic device. For example, the first electronic device (e.g., the STA) communicates with a first AP instance of the second electronic device (e.g., the AP) using the first address and the first parameter of the first AP instance of the second electronic device

At 704, the first electronic device (e.g., the STA) receives, from the second electronic device (e.g., the AP), a second address and a second parameter associated with the second electronic device. The second address is different from the first address and the second parameter is different from the first parameter. In some examples, the second address and the second parameter are associated with a second AP instance of the second electronic device.

At 706, the first electronic device (e.g., the STA) receives from the second electronic device, a frame indicating a transition to the second AP instance of the second electronic device. In some examples, the frame is a BTM request frame. In some examples, the frame is a channel switch announcement frame.

At 708, the first electronic device (e.g., the STA) communicates with the second electronic device (e.g., the AP) using the second address and the second parameter of the second electronic device. For example, the first electronic device (e.g., the STA) communicates with the second AP instance of the second electronic device (e.g., the AP) using the second address and the second parameter of the second AP instance.

According to some aspects, and as discussed above with response to FIG. 3A, before receiving the second address and the second parameter at 704, the first electronic device (e.g., the STA) can communicate with the first AP instance of the second electronic device (e.g., the AP). In this example, method 700 can further include receiving, from the second AP instance of the second electronic device, a beacon. The second address and the second parameter can be associated with the second AP instance of the second electronic device and the beacon can include the second address and the second parameter. In this example, operation 706 can include receiving, from the first AP instance of the second electronic device, a BTM request frame. Operation 708 can include performing an association procedure with the second AP instance of the second electronic device using the second address and the second parameter of the second electronic device, according to some aspects.

According to some aspects, and as discussed above with response to FIG. 3B, before receiving the second address and the second parameter at 704, the first electronic device (e.g., the STA) can communicate with the first AP instance of the second electronic device (e.g., the AP). In this example, operation 706 can further include receiving, from the first AP instance of the second electronic device, a BTM request frame. Method 700 can further include receiving, from the second AP instance of the second electronic device, a beacon. In some examples, the second address and the second parameter are associated with the second AP instance of the second electronic device and the beacon includes the second address and the second parameter. Operation 708 can include performing an association procedure with the second AP instance of the second electronic device using the second address and the second parameter of the second electronic device, according to some aspects.

According to some aspects, and as discussed above with response to FIG. 4, before receiving the second address and the second parameter at 704, the first electronic device (e.g., the STA) can communicate with the second electronic device (e.g., a first physical AP). Method 700 can further include transmitting an optional BTM query frame to the second electronic device and receiving a BTM request frame from the second electronic device. The BTM request frame can include at least one of a notification that the second electronic device is to transition to a second physical AP, information associated with a time when the second physical AP is available, a request for the second electronic device to modify an address and one or more parameters of the second electronic device, or information associated with a time when the first physical AP instance is unavailable. Method 700 can further include transmitting a BTM response frame to the second electronic device. BTM response frame can include address and/or parameters (or modified address and/or parameters) of the second electronic device. Method 700 can further include the first electronic device transitioning to associate with the second physical AP. In this example, operation 708 can further include performing authentication and/or association procedures between the first electronic device and the second physical AP. In this example, operation 708 can further include the first electronic device associating with the second physical AP.

According to some aspects, and as discussed above with response to FIG. 5A, before receiving the second address and the second parameter at 704, the first electronic device (e.g., the STA) communicates with the first AP instance of the second electronic device operating at a first channel. In this example, operation 706 can include receiving, from the first AP instance of the second electronic device, a frame including the second address and the second parameter and a second channel, different from the first channel, at which the second AP instance of the second electronic device will operate. In this example, operation 708 can further include performing, with the second AP instance of the second electronic device operating at the second channel, an association process using the second address and the second parameter of the second electronic device.

According to some aspects, and as discussed above with response to FIG. 5B, before receiving the second address and the second parameter at 704, the first electronic device (e.g., the STA) communicates with the first AP instance of the second electronic device operating at a first channel. In this example, operation 700 can include receiving, from the first AP instance of the second electronic device, a frame including the second address and the second parameter and a second channel, different from the first channel, at which the second AP instance of the second electronic device will operate. Method 700 can further include transmitting to the first AP instance of the second electronic device a frame (e.g., a channel switch announcement frame). In this example, operation 708 can further include communicating with the second AP instance of the second electronic device operating at the second channel and using the second address and the second parameter of the second electronic device.

Various aspects can be implemented, for example, using one or more computer systems, such as computer system 800 shown in FIG. 8. Computer system 800 can be any well-known computer capable of performing the functions described herein such as devices 110, 120, 150 of FIG. 1, or 200 of FIG. 2. Computer system 800 includes one or more processors (also called central processing units, or CPUs), such as a processor 804. Processor 804 is connected to a communication infrastructure 806 (e.g., a bus.) Computer system 800 also includes user input/output device(s) 803, such as monitors, keyboards, pointing devices, etc., that communicate with communication infrastructure 806 through user input/output interface(s) 802. Computer system 800 also includes a main or primary memory 808, such as random access memory (RAM). Main memory 808 may include one or more levels of cache. Main memory 808 has stored therein control logic (e.g., computer software) and/or data.

Computer system 800 may also include one or more secondary storage devices or memory 810. Secondary memory 810 may include, for example, a hard disk drive 812 and/or a removable storage device or drive 814. Removable storage drive 814 may be a floppy disk drive, a magnetic tape drive, a compact disk drive, an optical storage device, tape backup device, and/or any other storage device/drive.

Removable storage drive 814 may interact with a removable storage unit 818. Removable storage unit 818 includes a computer usable or readable storage device having stored thereon computer software (control logic) and/or data. Removable storage unit 818 may be a floppy disk, magnetic tape, compact disk, DVD, optical storage disk, and/ any other computer data storage device. Removable storage drive 814 reads from and/or writes to removable storage unit 818 in a well-known manner.

According to some aspects, secondary memory 810 may include other means, instrumentalities or other approaches for allowing computer programs and/or other instructions and/or data to be accessed by computer system 800. Such means, instrumentalities or other approaches may include, for example, a removable storage unit 822 and an interface 820. Examples of the removable storage unit 822 and the interface 820 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 800 may further include a communication or network interface 824. Communication interface 824 enables computer system 800 to communicate and interact with any combination of remote devices, remote networks, remote entities, etc. (individually and collectively referenced by reference number 828). For example, communication interface 824 may allow computer system 800 to communicate with remote devices 828 over communications path 826, which may be wired and/or wireless, and which may include any combination of LANs, WANs, the Internet, etc. Control logic and/or data may be transmitted to and from computer system 800 via communication path 826.

The operations in the preceding aspects can be implemented in a wide variety of configurations and architectures. Therefore, some or all of the operations in the preceding aspects may be performed in hardware, in software or both. In some aspects, a tangible, non-transitory apparatus or article of manufacture includes a tangible, non-transitory computer useable or readable medium having control logic (software) stored thereon is also referred to herein as a computer program product or program storage device. This includes, but is not limited to, computer system 800, main memory 808, secondary memory 810 and removable storage units 818 and 822, as well as tangible articles of manufacture embodying any combination of the foregoing. Such control logic, when executed by one or more data processing devices (such as computer system 800), causes such data processing devices to operate as described herein.

Based on the teachings contained in this disclosure, it will be apparent to persons skilled in the relevant art(s) how to make and use aspects of the disclosure using data processing devices, computer systems and/or computer architectures other than that shown in FIG. 8. In particular, aspects may operate with software, hardware, and/or operating system implementations other than those described herein.

It is to be appreciated that the Detailed Description section, and not the Summary and Abstract sections, is intended to be used to interpret the claims. The Summary and Abstract sections may set forth one or more, but not all, exemplary aspects of the disclosure as contemplated by the inventor(s), and thus, are not intended to limit the disclosure or the appended claims in any way.

While the disclosure has been described herein with reference to exemplary aspects for exemplary fields and applications, it should be understood that the disclosure is not limited thereto. Other aspects and modifications thereto are possible, and are within the scope of the disclosure as defined by the appended claims. For example, and without limiting the generality of this paragraph, aspects are not limited to the software, hardware, firmware, and/or entities illustrated in the figures and/or described herein. Further, aspects (whether or not explicitly described herein) have significant utility to fields and applications beyond the examples described herein.

Aspects have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. In addition, alternative aspects may perform functional blocks, steps, operations, methods, etc. using orderings different from those described herein.

References herein to "one aspect," "an aspect," "some aspects," "an example," "some examples" or similar phrases, indicate that the aspect described may include a particular feature, structure, or characteristic, but every aspect may not necessarily include the particular feature, structure, or characteristic. Moreover, such phrases are not necessarily referring to the same aspect. Further, when a particular feature, structure, or characteristic is described in connection with an aspect, it would be within the knowledge of persons skilled in the relevant art(s) to incorporate such feature, structure, or characteristic into other aspects whether or not explicitly mentioned or described herein.

The breadth and scope of the disclosure should not be limited by any of the above-described exemplary aspects, but should be defined only in accordance with the following claims.

As described above, aspects of the present technology may include the gathering and use of data available from various sources, e.g., to improve or enhance functionality. The present disclosure contemplates that in some instances, this gathered data may include personal information data that uniquely identifies or can be used to contact or locate a specific person. Such personal information data can include demographic data, location-based data, telephone numbers, email addresses, Twitter ID's, home addresses, data or records relating to a user's health or level of fitness (e.g., vital signs measurements, medication information, exercise information), date of birth, or any other identifying or personal information. The present disclosure recognizes that the use of such personal information data, in the present technology, may be used to the benefit of users.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should only occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of, or access to, certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology may be configurable to allow users to selectively "opt in" or "opt out" of participation in the collection of personal information data, e.g., during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure may broadly cover use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

## Claims

1. An access point multi-link device, AP MLD (110, 150), comprising:
a transceiver (220a-220n); and
a processor (210) coupled to the transceiver and configured to:
communicate, using the transceiver, with a mobile station (120) that is associated with a first WLAN access point, AP, instance of the AP MLD using a first address and a first parameter of the first WLAN AP instance of the AP MLD;
determine a second address and a second parameter for a second WLAN AP instance of the AP MLD, wherein the second address is different from the first address and the second parameter is different from the first parameter;
transmit, using the first WLAN AP instance, a frame to the mobile station indicating a transition to the second WLAN AP instance;
initiate the second WLAN AP instance of the AP MLD;
terminate the first WLAN AP instance of the AP MLD;
transmit, using the second WLAN AP instance, a beacon to the mobile station, wherein the beacon comprises the second address and the second parameter; and
communicate with the mobile station using the second address and the second parameter.

2. The AP MLD of claim 1, wherein the frame comprises a Basic Service Set, BSS, Transition Management, BTM, request frame and the processor is further configured to:
transmit, using the second WLAN AP instance, a beacon to the mobile station, wherein the beacon comprises the second address and the second parameter;
perform, using the second WLAN AP instance and before terminating the first WLAN AP instance, an association procedure using the second address and the second parameter.

3. The AP MLD of claim 2, wherein the BTM request frame comprises at least one of a notification that the AP MLD is transitioning to the second WLAN AP instance, a request for the mobile station to modify an address and one or more parameters of the mobile station, or information associated with a time when the first WLAN AP instance is terminated.

4. The AP MLD of claim 1, wherein the frame comprises a Basic Service Set, BSS, Transition Management, BTM, request frame and the processor is further configured to:
transmit, using the second WLAN AP instance, a beacon to the mobile station, wherein the beacon comprises the second address and the second parameter;
and
perform, using the second WLAN AP instance and after terminating the first WLAN AP instance, an association procedure using the second address and the second parameter.

5. The AP MLD of claim 4, wherein the BTM request frame comprises at least one of a notification that the AP MLD is transitioning to the second WLAN AP instance, information associated with a time when the second WLAN AP instance is initiated, a request for the mobile station to modify an address and one or more parameters of the mobile station, or information associated with a time when the first WLAN AP instance is terminated.

6. The AP MLD of claim 1, wherein:
the frame comprises the second address, the second parameter, and a second channel,
before determining the second address and the second parameter, the processor is configured to communicate with the mobile station using the first WLAN AP instance operating at a first channel, and
the processor is further configured to:
select the second channel, different from the first channel, for operating the second WLAN AP instance;
transition to the second WLAN AP instance on the second channel; and
perform, using the second WLAN AP instance operating at the second channel, an association procedure with the mobile station using the second address and the second parameter.

7. The AP MLD of claim 1, wherein:
the frame comprises the second address, the second parameter, and a second channel,
before determining the second address and the second parameter, the processor is configured to communicate with the mobile station using the first WLAN AP instance operating at a first channel, and
the processor is further configured to:
select the second channel, different from the first channel, for operating the second WLAN AP instance;
receive, using the first AP instance operating at the first channel, a response frame from the mobile station, wherein the response frame comprises a modified address and a modified parameter of the mobile station;
transition to the second AP instance on the second channel; and
communicate with the mobile station using the second WLAN AP instance operating at the second channel with the second address and the second parameter.

8. A method, comprising:
communicating, by a first WLAN access point, AP, (310a) instance of an access point multi-link device, AP MLD, with a mobile station (320) that is associated with the AP MLD using a first address and a first parameter of the first WLAN AP instance;
determining, by the AP MLD, a second address and a second parameter for a second WLAN AP instance (310b) of the AP MLD, wherein the second address is different from the first address and the second parameter is different from the first parameter;
transmitting, using the first WLAN AP instance, a frame to the mobile station indicating a transition to the second WLAN AP instance;
initiating (303, 335) the second WLAN AP instance of the AP MLD;
terminating (319, 339) the first WLAN AP instance of the AP MLD;
transmitting, using the second WLAN AP instance, a beacon to the mobile station, wherein the beacon comprises the second address and the second parameter; and
communicating with the mobile station using the second address and the second parameter.

9. The method of claim 8, wherein the frame comprises a Basic Service Set, BSS, Transition Management, BTM, request frame, and the method further comprises:
transmitting, using the second WLAN AP instance, a beacon to the mobile station, wherein the beacon comprises the second address and the second parameter;
performing, using the second WLAN AP instance and before terminating the first WLAN AP instance, an association procedure using the second address and the second parameter.

10. The method of claim 9, wherein the BTM request frame comprises at least one of a notification that the AP MLD is transitioning to the second WLAN AP instance, a request for the mobile station to modify an address and one or more parameters of the mobile station, or information associated with a time when the first WLAN AP instance is terminated.

11. The method of claim 8, wherein the frame comprises a Basic Service Set, BSS, Transition Management, BTM, request frame, and the method further comprises:
transmitting, using the second WLAN AP instance, a beacon to the mobile station, wherein the beacon comprises the second address and the second parameter; and
performing, using the second WLAN AP instance and after terminating the first WLAN AP instance, an association procedure using the second address and the second parameter.

12. The method of claim 11, wherein the BTM request frame comprises at least one of a notification that the AP MLD is transitioning to the second WLAN AP instance, information associated with a time when the second WLAN AP instance is initiated, a request for the mobile station to modify an address and one or more parameters of the mobile station, and information associated with a time when the first WLAN AP instance is terminated.

13. The method of claim 8, wherein the frame comprises the second address, the second parameter, and a second channel, and the method further comprises:
before determining the second address and the second parameter, communicating with the mobile station using the first WLAN AP instance of the AP MLD operating at a first channel;
selecting the second channel, different from the first channel, for operating the second WLAN AP instance;
transitioning to the second WLAN AP instance on the second channel; and
performing, using the second WLAN AP instance operating at the second channel, an association procedure with the mobile station using the second address and the second parameter.

14. The method of claim 8, wherein the frame comprises the second address, the second parameter, and a second channel, and the method further comprises:
before determining the second address and the second parameter, communicating with the mobile station using the first WLAN AP instance of the AP MLD operating at a first channel;
selecting the second channel, different from the first channel, for operating the second WLAN AP instance;
receiving, using the first WLAN AP instance operating at the first channel, a response frame from themobile station, wherein the response frame comprises a modified address and a modified parameter of the mobile station;
transitioning to the second WLAN AP instance on the second channel; and
communicating with the mobile station using the second WLAN AP instance operating at the second channel with the second address and the second parameter.

15. The method of claim 8, wherein the first parameter and the second parameter comprise one of parameters associated with management frames, parameters associated with security modes, parameters associated with block acknowledgment, parameters associated with beacons and/or other frames, parameters associated with MAC address, initial values of Time Synchronization function, TSF, sequence numbers of the Physical Protocol Data Units, PPDUs, Dialog token values to identify the management frames, or scrambler seeds in PHY preambles.

## Patentansprüche

1. Zugangspunkt-Multilink-Vorrichtung, AP MLD (110, 150), umfassend:
einen Sender-Empfänger (220a-220n); und
einen Prozessor (210), der mit dem Sender-Empfänger gekoppelt und konfiguriert ist zum:
Kommunizieren, durch den Sender-Empfänger, mit einer Mobilstation (120), die mit einer ersten WLAN-Zugangspunktinstanz (AP) der AP MLD verbunden ist, unter Verwendung einer ersten Adresse und eines ersten Parameters der ersten WLAN-AP-Instanz der AP MLD;
Bestimmen einer zweiten Adresse und eines zweiten Parameters für eine zweite WLAN-AP-Instanz des AP MLD, wobei sich die zweite Adresse von der ersten Adresse und der zweite Parameter vom ersten Parameter unterscheidet;
Senden, unter Verwendung der ersten WLAN-AP-Instanz einen Rahmen an die Mobilstation zu senden, der einen Übergang zur zweiten WLAN-AP-Instanz anzeigt;
Initiieren der zweiten WLAN-AP-Instanz des AP MLD;
Beenden der ersten WLAN-AP-Instanz des AP MLD;
unter Verwendung der zweiten WLAN-AP-Instanz ein Beacon an die Mobilstation senden, wobei das Beacon die zweite Adresse und den zweiten Parameter umfasst; und
Kommunizieren mit der Mobilstation unter Verwendung der zweiten Adresse und des zweiten Parameters.

2. AP MLD nach Anspruch 1, wobei der Rahmen einen Basic Service Set (BSS), ein Transition Management (BTM) und einen Anforderungsrahmen umfasst und der Prozessor ferner so konfiguriert ist zum:
Senden, unter Verwendung der zweiten WLAN-AP-Instanz, eines Beacons an die Mobilstation, wobei das Beacon die zweite Adresse und den zweiten Parameter umfasst;
Durchführen, unter Verwendung der zweiten WLAN-AP-Instanz und vor Beendigung der ersten WLAN-AP-Instanz, eines Zuordnungsverfahrens unter Verwendung der zweiten Adresse und des zweiten Parameters.

3. AP MLD nach Anspruch 2, wobei der BTM-Anforderungsrahmen mindestens eine der folgenden Informationen umfasst: eine Benachrichtigung, dass der AP MLD zur zweiten WLAN-AP-Instanz wechselt, eine Anforderung an die Mobilstation, eine Adresse und einen oder mehrere Parameter der Mobilstation zu ändern, oder Informationen, die mit einem Zeitpunkt verbunden sind, zu dem die erste WLAN-AP-Instanz beendet wird.

4. AP MLD nach Anspruch 1, wobei der Rahmen einen Basic Service Set (BSS), ein Transition Management (BTM) und einen Anforderungsrahmen umfasst und der Prozessor ferner so konfiguriert ist zum:
Senden, unter Verwendung der zweiten WLAN-AP-Instanz, eines Beacons an die Mobilstation, wobei das Beacon die zweite Adresse und den zweiten Parameter umfasst; und
Durchführen, unter Verwendung der zweiten WLAN-AP-Instanz und nach Beendigung der ersten WLAN-AP-Instanz, eines Zuordnungsverfahrens unter Verwendung der zweiten Adresse und des zweiten Parameters.

5. AP MLD nach Anspruch 4, wobei der BTM-Anforderungsrahmen mindestens eines der folgenden Elemente umfasst: eine Benachrichtigung, dass der AP MLD zur zweiten WLAN-AP-Instanz wechselt, Informationen, die mit einem Zeitpunkt verbunden sind, zu dem die zweite WLAN-AP-Instanz initiiert wird, eine Anforderung an die Mobilstation, eine Adresse und einen oder mehrere Parameter der Mobilstation zu ändern, oder Informationen, die mit einem Zeitpunkt verbunden sind, zu dem die erste WLAN-AP-Instanz beendet wird.

6. AP MLD nach Anspruch 1, wobei:
der Rahmen die zweite Adresse, den zweiten Parameter und einen zweiten Kanal umfasst,
der Prozessor vor der Bestimmung der zweiten Adresse und des zweiten Parameters so konfiguriert ist, dass er mit der Mobilstation unter Verwendung der ersten WLAN-AP-Instanz kommuniziert, die auf einem ersten Kanal arbeitet, und
der Prozessor ferner so konfiguriert ist zum:
Auswählen des zweiten Kanals, der sich vom ersten Kanal unterscheidet, für den Betrieb der zweiten WLAN-AP-Instanz;
Übergang zur zweiten WLAN-AP-Instanz auf dem zweiten Kanal; und
Durchführen, unter Verwendung der zweiten WLAN-AP-Instanz, die auf dem zweiten Kanal arbeitet, eines Zuordnungsverfahrens mit der Mobilstation unter Verwendung der zweiten Adresse und des zweiten Parameters.

7. AP MLD nach Anspruch 1, wobei:
der Rahmen die zweite Adresse, den zweiten Parameter und einen zweiten Kanal umfasst,
der Prozessor vor der Bestimmung der zweiten Adresse und des zweiten Parameters so konfiguriert ist, dass er mit der Mobilstation unter Verwendung der ersten WLAN-AP-Instanz, die auf einem ersten Kanal arbeitet, kommuniziert, und
der Prozessor ferner so konfiguriert ist zum:
Auswählen des zweiten Kanals, der sich vom ersten Kanal unterscheidet, für den Betrieb der zweiten WLAN-AP-Instanz;
Empfangen eines Antwortrahmens von der Mobilstation unter Verwendung der ersten AP-Instanz, die auf dem ersten Kanal arbeitet, wobei der Antwortrahmen eine modifizierte Adresse und einen modifizierten Parameter der Mobilstation umfasst;
Übergehen zu der zweiten AP-Instanz auf dem zweiten Kanal; und
Kommunizieren mit der Mobilstation unter Verwendung der zweiten WLAN-AP-Instanz, die auf dem zweiten Kanal arbeitet, mit der zweiten Adresse und dem zweiten Parameter.

8. Verfahren, umfassend:
Kommunizieren durch eine erste WLAN-Zugangspunktinstanz (310a) einer Zugangspunkt-Multilink-Vorrichtung (AP MLD) mit einer Mobilstation (320), die mit dem AP MLD verbunden ist, unter Verwendung einer ersten Adresse und eines ersten Parameters der ersten WLAN-AP-Instanz;
Bestimmen einer zweiten Adresse und eines zweiten Parameters für eine zweite WLAN-AP-Instanz (310b) des AP MLD durch den AP MLD, wobei sich die zweite Adresse von der ersten Adresse und der zweite Parameter vom ersten Parameter unterscheidet;
Senden eines Rahmens unter Verwendung der ersten WLAN-AP-Instanz an die Mobilstation, der einen Übergang zur zweiten WLAN-AP-Instanz anzeigt;
Initiieren (303, 335) der zweiten WLAN-AP-Instanz des AP-MLD;
Beenden (319, 339) der ersten WLAN-AP-Instanz des AP MLD;
Senden eines Beacons an die Mobilstation unter Verwendung der zweiten WLAN-AP-Instanz, wobei das Beacon die zweite Adresse und den zweiten Parameter umfasst; und
Kommunizieren mit der Mobilstation unter Verwendung der zweiten Adresse und des zweiten Parameters.

9. Verfahren nach Anspruch 8, wobei der Rahmen einen Basic Service Set (BSS)-Übergangsmanagement (BTM)-Anforderungsrahmen umfasst und das Verfahren ferner umfasst:
Senden eines Beacons an die Mobilstation unter Verwendung der zweiten WLAN-AP-Instanz, wobei das Beacon die zweite Adresse und den zweiten Parameter umfasst;
Durchführen eines Verbindungsvorgangs unter Verwendung der zweiten Adresse und des zweiten Parameters unter Verwendung der zweiten WLAN-AP-Instanz und vor Beendigung der ersten WLAN-AP-Instanz.

10. Verfahren nach Anspruch 9, wobei der BTM-Anforderungsrahmen mindestens eine der folgenden Informationen umfasst: eine Benachrichtigung, dass der AP MLD zur zweiten WLAN-AP-Instanz wechselt, eine Aufforderung an die Mobilstation, eine Adresse und einen oder mehrere Parameter der Mobilstation zu ändern, oder Informationen, die mit einem Zeitpunkt verbunden sind, zu dem die erste WLAN-AP-Instanz beendet wird.

11. Verfahren nach Anspruch 8, wobei der Rahmen einen Basic Service Set (BSS), BSS, Transition Management (BTM), Anforderungsrahmen umfasst und das Verfahren ferner umfasst:
Senden eines Beacons an die Mobilstation unter Verwendung der zweiten WLAN-AP-Instanz, wobei das Beacon die zweite Adresse und den zweiten Parameter umfasst; und
Durchführen eines Zuordnungsverfahrens unter Verwendung der zweiten Adresse und des zweiten Parameters unter Verwendung der zweiten WLAN-AP-Instanz und nach Beenden der ersten WLAN-AP-Instanz.

12. Verfahren nach Anspruch 11, wobei der BTM-Anforderungsrahmen mindestens eine der folgenden Informationen umfasst: eine Benachrichtigung, dass der AP MLD zur zweiten WLAN-AP-Instanz wechselt, Informationen, die mit einem Zeitpunkt verbunden sind, zu dem die zweite WLAN-AP-Instanz initiiert wird, eine Anforderung an die Mobilstation, eine Adresse und einen oder mehrere Parameter der Mobilstation zu ändern, und Informationen, die mit einem Zeitpunkt verbunden sind, zu dem die erste WLAN-AP-Instanz beendet wird.

13. Verfahren nach Anspruch 8, wobei der Rahmen die zweite Adresse, den zweiten Parameter und einen zweiten Kanal umfasst und das Verfahren ferner umfasst:
vor dem Bestimmen der zweiten Adresse und des zweiten Parameters, Kommunizieren mit der Mobilstation unter Verwendung der ersten WLAN-AP-Instanz des AP MLD, die auf einem ersten Kanal arbeitet;
Auswählen des zweiten Kanals, der sich vom ersten Kanal unterscheidet, zum Betreiben der zweiten WLAN-AP-Instanz;
Übergang zur zweiten WLAN-AP-Instanz auf dem zweiten Kanal; und
Durchführen eines Zuordnungsverfahrens mit der Mobilstation unter Verwendung der zweiten Adresse und des zweiten Parameters unter Verwendung der zweiten WLAN-AP-Instanz, die auf dem zweiten Kanal arbeitet.

14. Verfahren nach Anspruch 8, wobei der Rahmen die zweite Adresse, den zweiten Parameter und einen zweiten Kanal umfasst und das Verfahren ferner umfasst:
vor dem Bestimmen der zweiten Adresse und des zweiten Parameters, Kommunizieren mit der Mobilstation unter Verwendung der ersten WLAN-AP-Instanz des AP MLD, die auf einem ersten Kanal arbeitet;
Auswählen des zweiten Kanals, der sich vom ersten Kanal unterscheidet, zum Betreiben der zweiten WLAN-AP-Instanz;
Empfangen eines Antwortrahmens von der Mobilstation unter Verwendung der ersten WLAN-AP-Instanz, die auf dem ersten Kanal arbeitet, wobei der Antwortrahmen eine modifizierte Adresse und einen modifizierten Parameter der Mobilstation umfasst;
Übergang zur zweiten WLAN-AP-Instanz auf dem zweiten Kanal; und
Kommunizieren mit der Mobilstation unter Verwendung der zweiten WLAN-AP-Instanz, die auf dem zweiten Kanal arbeitet, mit der zweiten Adresse und dem zweiten Parameter.

15. Verfahren nach Anspruch 8, wobei der erste Parameter und der zweite Parameter einen der Parameter umfassen, die mit Verwaltungsrahmen, Sicherheitsmodi, Blockbestätigungen, Beacons und/oder anderen Rahmen, MAC-Adressen, Anfangswerten der Zeitsynchronisationsfunktion (TSF), Sequenznummern der physikalischen Protokolldateneinheiten (PPDUs), Dialog-Token-Werten zur Identifizierung der Verwaltungsrahmen oder Scrambler-Seeds in PHY-Präambeln verbunden sind.

## Revendications

1. Un dispositif multi-liaison de point d'accès, AP, MLD d'AP (110, 150), comprenant :
un émetteur-récepteur (220a-220n) ; et
un processeur (210) couplé à l'émetteur-récepteur et configuré pour :
communiquer, en utilisant l'émetteur-récepteur, avec une station mobile (120) qui est associée à une première instance de point d'accès, AP, de WLAN, du MLD d'AP en utilisant une première adresse et un premier paramètre de la première instance d'AP de WLAN du MLD d'AP ;
déterminer une seconde adresse et un second paramètre pour une seconde instance d'AP de WLAN du MLD d'AP, dans lequel la seconde adresse est différente de la première adresse et le second paramètre est différent du premier paramètre ;
transmettre, en utilisant la première instance d'AP de WLAN, une trame à la station mobile indiquant une transition vers la seconde instance d'AP de WLAN ;
initier la seconde instance d'AP de WLAN du MLD d'AP ;
terminer la première instance d'AP de WLAN du MLD d'AP ;
transmettre, en utilisant la seconde instance d'AP de WLAN, une balise à la station mobile, dans lequel la balise comprend la seconde adresse et le second paramètre ; et
communiquer avec la station mobile en utilisant la seconde adresse et le second paramètre.

2. Le MLD d'AP selon la revendication 1, dans lequel la trame comprend une trame de requête de gestion de transition, BTM, d'ensemble de services de base, BSS, et le processeur est en outre configuré pour :
transmettre, à l'aide de la seconde instance d'AP de WLAN, une balise à la station mobile, dans lequel la balise comprend la seconde adresse et le second paramètre ;
réaliser, en utilisant la seconde instance d'AP de WLAN et avant la terminaison de la première instance d'AP de WLAN, une procédure d'association en utilisant la seconde adresse et le second paramètre.

3. Le MLD d'AP selon la revendication 2, dans lequel la trame de requête BTM comprend au moins une parmi une notification indiquant que le MLD d'AP effectue la transition vers la seconde instance d'AP de WLAN, une requête à la station mobile de modifier une adresse et un ou plusieurs paramètres de la station mobile, ou une information associée à un temps auquel la première instance d'AP de WLAN est terminée.

4. Le MLD d'AP selon la revendication 1, dans lequel la trame comprend une trame de requête de gestion de transition, BTM, d'ensemble de services de base, BSS, et le processeur est en outre configuré pour :
transmettre, en utilisant la seconde instance d'AP de WLAN, une balise à la station mobile, dans lequel la balise comprend la seconde adresse et le second paramètre ; et
réaliser, en utilisant la seconde instance d'AP de WLAN et après la terminaison de la première instance d'AP de WLAN, une procédure d'association avec la seconde adresse et le second paramètre.

5. Le MLD d'AP selon la revendication 4, dans lequel la trame de requête BTM comprend au moins une parmi une notification indiquant que le MLD d'AP effectue la transition vers la seconde instance d'AP de WLAN, une information associée à un temps auquel la seconde instance d'AP de WLAN est initiée, une requête à la station mobile de modifier une adresse et un ou plusieurs paramètres de la station mobile, ou une information associée à un temps auquel la première instance d'AP de WLAN est terminée.

6. Le MLD d'AP selon la revendication 1, dans lequel :
la trame comprend la seconde adresse, le second paramètre, et un second canal,
avant de déterminer la seconde adresse et le second paramètre, le processeur est configuré pour communiquer avec la station mobile en utilisant la première instance d'AP de WLAN fonctionnant sur un premier canal, et
le processeur est en outre configuré pour :
sélectionner le second canal, différent du premier canal, pour faire fonctionner la seconde instance d'AP de WLAN ;
effectuer la transition vers la seconde instance d'AP de WLAN sur le second canal ; et
réaliser, en utilisant la seconde instance d'AP de WLAN fonctionnant sur le second canal, une procédure d'association avec la station mobile en utilisant la seconde adresse et le second paramètre.

7. Le MLD d'AP selon la revendication 1, dans lequel :
la trame comprend la seconde adresse, le second paramètre, et un second canal,
avant de déterminer la seconde adresse et le second paramètre, le processeur est configuré pour communiquer avec la station mobile en utilisant la première instance d'AP de WLAN fonctionnant sur un premier canal, et
le processeur est en outre configuré pour :
sélectionner le second canal, différent du premier canal, pour faire fonctionner la seconde instance d'AP de WLAN ;
recevoir, en utilisant la première instance d'AP fonctionnant sur le premier canal, une trame de réponse à partir de la station mobile, dans lequel la trame de réponse comprend une adresse modifiée et un paramètre modifié de la station mobile ;
effectuer la transition vers la seconde instance d'AP sur le second canal ; et
communiquer avec la station mobile en utilisant la seconde instance d'AP de WLAN fonctionnant sur le second canal avec la seconde adresse et le second paramètre.

8. Un procédé, comprenant :
la communication, par une première instance de point d'accès, AP, de WLAN (310a) d'un dispositif multi-liaison de point d'accès, MLD d'AP, avec une station mobile (320) qui est associée au MLD d'AP en utilisant une première adresse et un premier paramètre de la première instance d'AP de WLAN ;
la détermination, par le MLD d'AP, d'une seconde adresse et d'un second paramètre pour une seconde instance (310b) d'AP de WLAN du MLD d'AP, dans lequel la seconde adresse est différente de la première adresse et le second paramètre est différent du premier paramètre ;
la transmission, en utilisant la première instance d'AP de WLAN, d'une trame à la station mobile indiquant une transition vers la seconde instance d'AP de WLAN ;
l'initiation (303, 335) de la seconde instance d'AP de WLAN du MLD d'AP ;
la terminaison (319, 339) de la première instance d'AP de WLAN du MLD d'AP ;
la transmission, en utilisant la seconde instance d'AP de WLAN, d'une balise à la station mobile, dans lequel la balise comprend la seconde adresse et le second paramètre ; et
la communication avec la station mobile en utilisant la seconde adresse et le second paramètre.

9. Le procédé selon la revendication 8, dans lequel la trame comprend une trame de requête de gestion de transition, BTM, d'ensemble de services de base, BSS, et le procédé comprend en outre :
la transmission, en utilisant la seconde instance d'AP de WLAN, d'une balise à la station mobile, dans lequel la balise comprend la seconde adresse et le second paramètre ;
la réalisation, en utilisant la seconde instance d'AP de WLAN et avant de terminer la première instance d'AP de WLAN, d'une procédure d'association en utilisant la seconde adresse et le second paramètre.

10. Le procédé selon la revendication 9, dans lequel la trame de requête BTM comprend au moins une parmi une notification indiquant que le MLD d'AP effectue la transition vers la seconde instance d'AP de WLAN, une requête à la station mobile de modifier une adresse et un ou plusieurs paramètres de la station mobile, ou une information associée à un temps auquel la première instance d'AP de WLAN est terminée.

11. Le procédé selon la revendication 8, dans lequel la trame comprend une trame de requête de gestion de transition, BTM, d'ensemble de services de base, BSS, et le procédé comprend en outre :
la transmission, en utilisant la seconde instance d'AP de WLAN, d'une balise à la station mobile, dans lequel la balise comprend la seconde adresse et le second paramètre ; et
la réalisation, en utilisant la seconde instance d'AP de WLAN et après la terminaison de la première instance d'AP de WLAN, d'une procédure d'association en utilisant la seconde adresse et le second paramètre.

12. Le procédé selon la revendication 11, dans lequel la trame de requête BTM comprend au moins une parmi une notification indiquant que le MLD d'AP effectue la transition vers la seconde instance d'AP de WLAN, une information associée à un temps auquel la seconde instance d'AP de WLAN est initiée, une requête à la station mobile de modifier une adresse et un ou plusieurs paramètres de la station mobile, et une information associée à un temps auquel la première instance d'AP de WLAN est terminée.

13. Le procédé selon la revendication 8, dans lequel la trame comprend la seconde adresse, le second paramètre et un second canal, et le procédé comprend en outre :
avant la détermination de la seconde adresse et du second paramètre, la communication avec la station mobile en utilisant la première instance d'AP de WLAN du MLD d'AP fonctionnant sur un premier canal ;
la sélection du second canal, différent du premier, pour faire fonctionner la seconde instance d'AP de WLAN ;
la transition vers la seconde instance d'AP de WLAN sur le second canal ; et
la réalisation, en utilisant la seconde instance d'AP de WLAN fonctionnant sur le second canal, d'une procédure d'association avec la station mobile en utilisant la seconde adresse et le second paramètre.

14. Le procédé selon la revendication 8, dans lequel la trame comprend la seconde adresse, le second paramètre et un second canal, et le procédé comprend en outre :
avant la détermination de la seconde adresse et du second paramètre, la communication avec la station mobile en utilisant la première instance d'AP de WLAN du MLD d'AP fonctionnant sur un premier canal ;
la sélection du second canal, différent du premier, pour faire fonctionner la seconde instance d'AP de WLAN ;
la réception, en utilisant la première instance d'AP de WLAN fonctionnant sur le premier canal, d'une trame de réponse à partir de la station mobile, dans lequel la trame de réponse comprend une adresse modifiée et un paramètre modifié de la station mobile ;
la transition vers la seconde instance d'AP de WLAN sur le second canal ; et
la communication avec la station mobile en utilisant la seconde instance d'AP de WLAN fonctionnant sur le second canal avec la seconde adresse et le second paramètre.

15. Le procédé selon la revendication 8, dans lequel le premier paramètre et le second paramètre comprennent un parmi des paramètres associés à des trames de gestion, des paramètres associés à des modes de sécurité, des paramètres associés à un accusé de réception de bloc, des paramètres associés à des balises et/ou d'autres trames, des paramètres associés à une adresse MAC, des valeurs initiales de numéros de séquence de fonction de synchronisation temporelle, TSF, des unités de données de protocole physiques, PPDU, des valeurs des jetons de dialogue pour identifier les trames de gestion, ou des germes de brouilleur dans des préambules PHY.
